(19) Europäisches Patentamt / European Patent Office / Office européen des brevets

(11) **EP 3 717 437 B1**

(12) **EUROPÄISCHE PATENTSCHRIFT**

(45) Veröffentlichungstag und Bekanntmachung des Hinweises auf die Patenterteilung:
**03.08.2022  Patentblatt 2022/31**

(21) Anmeldenummer: **18811202.3**

(22) Anmeldetag: **26.11.2018**

(51) Internationale Patentklassifikation (IPC):
**C04B 28/04** *(2006.01)*    **C04B 40/00** *(2006.01)*
**C04B 111/28** *(2006.01)*

(52) Gemeinsame Patentklassifikation (CPC):
(C-Sets verfügbar)
**C04B 28/04; C04B 40/0032;** C04B 2111/28;
C04B 2201/20; C04B 2201/50    (Forts.)

(86) Internationale Anmeldenummer:
**PCT/EP2018/082508**

(87) Internationale Veröffentlichungsnummer:
**WO 2019/105877 (06.06.2019 Gazette 2019/23)**

(54) **BINDEBAUSTOFFMISCHUNG AUF ZEMENTBASIS UND BINDEBAUSTOFF**

CEMENTITIOUS BINDER MIXTURE AND CONSTRUCTION MATERIAL

MÉLANGE DE LIANT À BASE DE CIMENT ET MATÉRIAU DE CONSTRUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2017  DE 102017128150**

(43) Veröffentlichungstag der Anmeldung:
**07.10.2020  Patentblatt 2020/41**

(73) Patentinhaber: **Technische Hochschule Nuernberg
Georg Simon Ohm
90489 Nuernberg (DE)**

(72) Erfinder:
• **KRCMAR, Wolfgang
90562 Heroldsberg (DE)**
• **SCHMIDT, Sebastian
90443Nürnberg (DE)**

(74) Vertreter: **Negendanck, Matthias
Dr.-Ing. Dipl.-Phys. Univ. Matthias Negendanck
Patentmanufaktur
Rennweg 60-62
90489 Nürnberg (DE)**

(56) Entgegenhaltungen:
EP-A1- 0 607 073          EP-A1- 1 607 378
EP-A1- 3 138 826          EP-A2- 2 030 956
EP-B1- 2 030 956          EP-B1- 2 433 918
WO-A1-2009/067727         DE-A1- 2 624 950
DE-A1- 2 624 950          DE-A1- 4 320 506
DE-A1-102006 020 877      DE-A1-102006 020 880
DE-A1-102011 007 834      DE-C2- 19 911 307

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C04B 28/04, C04B 14/066, C04B 14/16,
C04B 14/185, C04B 20/008**

**Beschreibung**

Die Erfindung betrifft eine Bindebaustoffmischung auf Zementbasis enthaltend mindestens 50 Ma.-% Zement.

Bindebaustoffmischungen sind beispielsweise Mörtel, Beton und Putz. Mörtel sind Baustoffe, die in der Regel aus Bindemittel, Sand und Wasser hergestellt werden und denen zur Beeinflussung bestimmter Eigenschaften Zusätze zugegeben werden. Zusammensetzungen und Eigenschaften der Bindebaustoffmischungen können je nach Verwendungszweck sehr verschieden sein.

Die Druckschrift DE 199 113 07 C2 beschreibt einen Leichtmörtel, der Zement als einziges Bindemittel, Blähton-Granulat, Blähglas-Granulat als Rundkorn mit abgestuftem Kornaufbau, Zelluloseester und Vinylacetatpolymer mit 0,01 bis 1 Ma.-% enthält, bei dem die Teilchengröße maximal ein Millimeter ist, bei dem das Blähton-Granulat gebrochen ist und mit 40 bis 70 Masse-% des Blähton-Granulats kleiner 0,25 Millimeter ist und bei dem das Blähglas-Granulat mit 85 bis 95 Masse-% 0,5 bis 1 Millimeter und mit 5 bis 15 Masse-% des Blähglas-Granulats 0,25 bis 0,5 Millimeter ist.

Die Druckschrift DE 10 2006 020877 A1 beschreibt eine Verwendung von pyrogenem Metalloxid zur Herstellung einer selbstverdichtenden, hydraulische Bindemittel enthaltenden Zubereitung mit hoher Frühfestigkeit, wobei die Zubereitung als weitere Bestandteile wenigstens ein hydraulisches Bindemittel und Wasser enthalten.

Die Druckschrift WO 2009/067727 A1 offenbart einen Formstein, insbesondere einen Ziegelstein, umfassend Keramik und/oder Beton, mit wenigstens einem Hohlraum, wobei in dem wenigstens einen Hohlraum, eine unmittelbar in dem wenigstens einen Hohlraum gebildete Füllung umfassend Aerogel und/oder Aerogel-Granulat angeordnet ist.

Die Druckschrift EP 3 138 826 A1 beschreibt eine Baustofftrockenmischung, insbesondere zur Herstellung eines Brandschutzputzes, wobei die Baustofftrockenmischung mindestens 10 Gew.-% Kieselsäure, bezogen auf die Baustofftrockenmischung, aufweist, wobei die Kieselsäure pyrogene Kieselsäure ist. Die Druckschrift DE 26 24 950 A1 offenbart einen druckfesten und wärmedämmenden Leichtbeton umfassend: 1,8 RT Zement, 0,5 RT Kohlefilterasche, 3 RT Bims 0/4mm, 7 RT Polystyrolperlen 10/15mm, 0,01 RT Methylzellulose und 0,4 RT amorphe Kieselsäure, wobei die amorphe Kieselsäure bewirkt, dass die zementäre Matrix saugfähig und kapillar ist und somit einen niedrigen Diffusionswiderstand aufweist. Die Druckschrift EP 2 030 956 A2, die den nächstkommenden Stand der Technik bildet, beschreibt ein mineralisches, hydraulisches Bindemittel, insbesondere zur Herstellung von Beton oder Mörteln oder Zementsuspensionen auf Basis von zumindest einem Zement, wobei der Zement Klinkerphasen wie insbesondere C3S, C2S, C3A, C4AF aufweist, die mit Wasser zu Zementstein erhärtende Hydratphasen bilden, mit zusätzlich mindestens einer feinteiligen SiO2-Komponente in Form von gefällter Kieselsäure und mindestens einer feinteiligen Calciumoxid-Komponente, die mit Anmachwasser während der Ruhephase aufgrund einer puzzolanischen Reaktion erhärtende, eine Frühfestigkeit bewirkende Calciumsilikathydratphasen bilden.

Der Erfindung liegt die Aufgabe zugrunde, eine Bindebaustoffmischung zur Herstellung eines Bindebaustoffes bereitzustellen, welcher eine verminderte Wärmeleitfähigkeit bei gleichbleibender Druckfestigkeit aufweist.

Diese Aufgabe wird durch eine Bindebaustoffmischung auf Zementbasis mit den Merkmalen des Anspruchs 1 und einem Bindebaustoff mit den Merkmalen des Anspruchs 7 gelöst. Bevorzugte und/oder vorteilhafte Ausführungsformen der Erfindung ergeben sich aus den Unteransprüchen, der nachfolgenden Beschreibung und/oder den beigefügten Figuren.

Erfindungsgemäß wird eine Bindebaustoffmischung auf Zementbasis vorgeschlagen. Die Bindebaustoffmischung ist insbesondere eine pulverförmige Mischung. Die Bindebaustoffmischung ergibt beim Anmischen mit Wasser und nachfolgendem Aushärten einen Bindebaustoff. Die Bindebaustoffmischung enthält mindestens 50 Ma.-% Zement. Vorzugsweise enthält die Bindebaustoffmischung mehr als 70 Ma.-% Zement und im Speziellen mehr als 85 Ma.-% Zement. Insbesondere ist der Zementgehalt der Bindebaustoffmischung zwischen 60 und 85 Ma.-%. Als Ma.-% wird insbesondere der Masseanteil verstanden. Vol.-% bezieht sich insbesondere auf Vol.-% in normaler und/oder lockerer Schüttung. Alternativ und/oder ergänzend bezieht sich Vol.-% auf eine Umrechnung der Masse unter Bezugnahme der spezifischen Dichte auf Vol.-%. Der Zement ist insbesondere ein Portlandzement. Alternativ ist der Zement ein Trasszement, Tonerdenzement, Flugaschezement und/oder besteht aus anderen bekannten Zementsorten, insbesondere die Hauptklinkerphasen Tricalciumsilikat, Dicalciumsilikat, Tricalciumaluminat und Tetracalciumaluminatferrit enthaltend.

Die Bindebaustoffmischung enthält zwischen 3 und 30 Ma.-% pyrogene Kieselsäure. Insbesondere enthält die Bindebaustoffmischung zwischen 8 und 30 Ma.-% pyrogene Kieselsäure und im Speziellen zwischen 15 und 30 Ma.-% pyrogene Kieselsäure. Im Speziellen enthält die Bindebaustoffmischung neben 90 Ma.-% anderer Anteile 10 Ma.-% pyrogene Kieselsäure. Insbesondere ergänzen sich die anderen Anteile und pyrogene Kieselsäure zu 100 Ma.-%. Als pyrogene Kieselsäure wird insbesondere pyrogenes Siliziumdioxid verstanden. Vorzugsweise besteht pyrogene Kieselsäure vollständig und/oder fast vollständig, wobei unter fast vollständig zu mehr als 98 Vol.-% verstanden wird, aus Siliziumdioxidpartikeln, die größeren Einheiten aggregiert sind. Insbesondere besteht pyrogenes Siliziumdioxid aus amorphen Siliziumdioxidpartikeln. Vorzugsweise ist die pyrogene Kieselsäure in einem pyrogenen Verfahren herstellbar, wobei in einer Brennervorrichtung bei Temperaturen größer 1500 Grad Celsius eine flüchtige Siliciumverbindung, beispielsweise Siliciumtetrachlorid, mit Luft vermischt und verbrannt wird. Im Speziellen sind die Ma.-% mittels der spezifischen Dichten in Vol.-% umrechenbar. Insbesondere ergänzen sich Zement, pyrogene Kieselsäure, Zusatzstoffe und/oder Zuschlagstoffe zu 100 Vol.-% und/oder 100 Ma.-%. Ferner können Vol.-% in Ma-% beispielsweise mittels einer Stoffraumrechnung umgerechnet werden. Insbesondere können Vol.-% in Masse-% mittels der Gleichung

$$V_G = V_M + V_W + V_L + V_Z + V_X \ldots = \left(\frac{m_M}{\rho_M}\right) + \left(\frac{m_W}{\rho_W}\right) + V_L + \left(\frac{m_Z}{\rho_Z}\right) + \left(\frac{m_X}{\rho_X}\right) \ldots$$

umgerechnet werden, wobei:

$V_G$ : Gesamtvolumen der Bindebaustoffmischung [l]
$V_M$ : Volumen des Zements [l]
$V_W$ : Volumen des Wassers [l]
$V_L$ : Volumen der Luft (Poren) [%]
$V_Z$ : Volumen der pyrogenen Kieselsäure [l]
$V_X$ : Volumen eines Zusatzstoffes (z. B. Zusatzstoff/Zuschlagstoff, Perlit, Alumosilicat) [l]
$m_M$ : Masse des Zements [g]
$m_W$ : Masse des Wassers [g]
$m_Z$ : Masse der pyrogenen Kieselsäure [g]
$m_X$ : Masse des Zusatzstoffes [g]
$\rho_M$ : Feststoffdichte des Zements [g/cm³]
$\rho_W$ : Feststoffdichte des Wassers [g/cm³]
$\rho_Z$ : Feststoffdichte der pyrogenen Kieselsäure [g/cm³]
$\rho_X$ : Feststoffdichte des Zusatzstoffes [g/cm³]

Anm.: Zusatzstoffe nehmen an der Reaktion teil, Zuschlagstoffe (z. B. Styropor) nicht.

Vorteil der Erfindung ist es eine Bindebaustoffmischung zur Herstellung eines Bindebaustoffes mit verbesserter Wärmedämmung bereitzustellen. Wärmeleitfähigkeiten von Zementbaustoffen vergleichbarer Festigkeitsklassen sind typischerweise größer als 0,20 W/(m*K). Durch den Zusatz der pyrogenen Kieselsäure in dem angegebenen Anteil zur Bindebaustoffmischung, konnte ein Bindebaustoff mit einer verringerten Wärmeleitfähigkeit bereitgestellt werden, wobei die Wärmeleitfähigkeit in diesem Fall z. B. 0,17 W/(m*K) beträgt. Als weiterer Vorteil und Wirkung der Erfindung ergibt sich, dass durch den Zusatz der pyrogenen Kieselsäure in dem genannten Anteil eine Druckfestigkeit von 11,9 MPa nach 28 Tagen gewährleistet werden konnte.

In einer besonders bevorzugten Ausgestaltung der Erfindung enthält die Bindebaustoffmischung 1 bis 40 Ma.-% und/oder 1 bis 40 Vol.-% eines Zusatzstoffes. Insbesondere enthält die Bindebaustoffmischung zwischen 1 und 40 Ma.-% einer Mischung aus mehreren Zusatzstoffen. Der Zusatzstoff ist beispielsweise Füller, Gesteinsmehl, Kalk und/oder puzzolanischer Stoff, wie beispielsweise Flugasche, Tuff, Trass oder Silicastaub. Ferner sind die Zusatzstoffe beispielsweise organische Stoffe, wie Kunstharze. Alternativ und/oder ergänzend sind die Zusatzstoffe Farbpigmente, Stahl-, Glas- oder Kunststofffasern. Die Zusatzstoffe umfassen insbesondere Verflüssiger, Fließmittel, Stabilisiermittel, Luftporenbildner, Beschleuniger zur Erhärtungsbeschleunigung, Verzögerer und/oder Dichtungsmittel. Insbesondere ist der Zusatzstoff Styroporgranulat. Dieser Ausgestaltung liegt die Überlegung zugrunde, eine Bindebaustoffmischung bereitzustellen, welche wärmedämmend ist und durch den Zusatz von Zusatzstoffen auf die entsprechenden einsatzbestimmenden Bedürfnisse der Bindebaustoffmischung abgestimmt ist.

In einer möglichen Ausgestaltung der Erfindung umfasst die Bindebaustoffmischung einen Anteil von weniger als 25 Ma.-% und/oder 25 Vol.-% an Siebrückständen größer 125 Mikrometer, wobei die Siebrückstände insbesondere durch eine Siebanalyse gemäß DIN 66165-1:1987-04 und DIN 66165-2:1987-04 bestimmt werden. Insbesondere ist der Anteil von Partikeln größer als 125 Mikrometer in der Bindebaustoffmischung geringer als 20 Ma.-%, im Speziellen geringer als 15 Ma.-% und vorzugsweise geringer als 10 Ma.-%. Der Volumenanteil an Partikeln größer als 125 Mikrometer in der Bindebaustoffmischung ist insbesondere kleiner als 20 Vol.-%. Insbesondere ist der Anteil an Partikeln kleiner als 100 Mikrometer in der Bindebaustoffmischung größer als 70 Ma.-%. Dieser Ausgestaltung liegt die Überlegung zugrunde, eine Bindebaustoffmischung bereitzustellen, bei der die Druckfestigkeit, der Elastizitätsmodul und die Biegezugfestigkeit erhöht wird, wobei die Wärmeleitfähigkeit gleichzeitig reduziert wird.

Die Korngröße, insbesondere als mittlerer Korndurchmesser d50 und/oder Äquivalentdurchmesser verstanden, der Bindebaustoffmischung ist vorzugsweise kleiner als 30 Mikrometer, insbesondere kleiner als 25 Mikrometer und im Speziellen kleiner als 20 Mikrometer. Der mittlere Korndurchmesser ist beispielsweise durch Siebanalyse und/oder lasergestützter Korngrößenanalyse und/oder durch Mikroskopie bestimmbar, beispielsweise wird die Korngröße gemäß DIN 4022 bestimmt. Die Feststoffdichte der Bindebaustoffmischung ist insbesondere kleiner als 2,3 kg/dm³ vorzugsweise kleiner als 2,1 kg/dm³ und im Speziellen kleiner als 2,0 kg/dm³.

Erfindungsgemäß enthält die Bindebaustoffmischung zwischen 3 und 20 Ma.-% expandierten Perlit. Vorzugsweise enthält die Bindebaustoffmischung einen Anteil von 5 bis 15 Ma.-% expandierten Perlit. Expandierter Perlit ist insbesondere auch als Blähperlit bekannt. Der expandierte Perlit hat eine Korngröße, insbesondere mittleren Korndurchmesser dso, zwischen 20 und 50 Mikrometer. Insbesondere weist der expandierte Perlit eine Korngröße, ferner mittleren Korndurchmesser dso, von 25 bis 30 Mikrometer auf. Die BET-Oberfläche, auch spezifische Oberfläche genannt, des expandierten Perlits ist insbesondere größer als 2,5 $m^2/g$ und im Speziellen größer als 3 $m^2/g$. Die BET-Oberfläche wird beispielsweise in einer Analyse basierend auf der DIN-ISO 9277 und/oder DIN 66131 bestimmt. Vorzugsweise ist die Feststoffdichte des expandierten Perlits zwischen 2,0 kg/dm³ und 3,0 kg/dm³. Beispielsweise umfasst die Bindebaustoffmischung 80 Ma.-% Zement, 10 Ma.-% pyrogene Kieselsäure und 10 Ma.-% expandierten Perlit.

In einer besonders bevorzugten Ausgestaltung der Erfindung umfasst die Bindebaustoffmischung einen Gehalt zwischen 1 und 20 Ma.-% an expandiertem Vulkangestein. Insbesondere ist das expandierte Vulkangestein ein mikrozellulares Vulkangestein. Vorzugsweise ist das expandierte Vulkangestein aus der Gruppe der Aluminiumsilikate. Das expandierte Vulkangestein ist insbesondere aus kugeligen, stäbchenförmigen und/oder flockigen/voluminösen Partikeln aufgebaut.

Insbesondere weist das expandierte Vulkangestein eine Korngröße, ferner verstanden als mittlerer Korndurchmesser dso, kleiner als 50 Mikrometer auf. Insbesondere liegt die Korngröße des expandierten Vulkangesteins zwischen 25 Mikrometern und 40 Mikrometern. Die Feststoffdichte des expandierten Vulkangesteins ist insbesondere kleiner als 1 g/cm³. Das expandierte Vulkangestein weist vorzugsweise eine BET-Oberfläche zwischen 2,5 und 3,5 $m^2/g$ auf. Beispielsweise umfasst die Bindebaustoffmischung 80 Ma.-% Zement, 10 Ma.-% pyrogene Kieselsäure und 10 Ma.- % expandiertes Vulkangestein. Alternativ umfasst die Bindebaustoffmischung 80 Vol.-% Zement, 10 Vol.-% pyrogene Kieselsäure, 5 Vol.-% expandiertes Vulkangestein und 5 Vol.-% expandierten Perlit.

In einer besonders bevorzugten Ausgestaltung der Erfindung weist die pyrogene Kieselsäure eine mit dem BET-Gasadsorptions-Verfahren bestimmte Oberfläche größer als 50 $m^2/g$ auf. Insbesondere ist die spezifische Oberfläche zum Beispiel die BET-Oberfläche größer als 200 $m^2/g$ und im Speziellen größer als 400 $m^2/g$. Besonders bevorzugt ist es, dass die BET-Oberfläche der pyrogenen Kieselsäure zwischen 100 und 250 $m^2/g$ liegt. Die Primärteilchengröße der pyrogenen Kieselsäure ist vorzugsweise kleiner als 40 Nanometer und im Speziellen kleiner als 25 Nanometer.

Einen weiteren Gegenstand der Erfindung bildet ein Bindebaustoff. Der Bindebaustoff ist herstellbar durch Mischung der Bindebaustoffmischung nach einem der vorherigen Ansprüche und/oder nach der vorherigen Beschreibung mit Wasser. Die Mischung der Bindebaustoffmischung mit Wasser bildet ein Bindebaustoffzwischenprodukt. Insbesondere ist das Bindebaustoffzwischenprodukt eine streichfähige und/oder flüssige Masse. Durch Aushärten des Bindebaustoffzwischenprodukts ist der Bindebaustoff herstellbar. Insbesondere ist der Bindebaustoff durch ein mindestens 28 tägiges Aushärten des Bindebaustoffzwischenprodukts herstellbar.

Dieser Erfindung liegt die Überlegung zugrunde, einen Bindebaustoff bereitzustellen, der auf einfache Weise aus einer Bindebaustoffmischung herstellbar ist. Insbesondere ist die Überlegung einen Bindebaustoff mit verbesserter Wärmedämmung bereitzustellen, wobei gleichzeitig durch die Verbesserung der Wärmedämmung die Festigkeitsklasse des Bindebaustoffs nicht reduziert wird. Insbesondere weist der Bindebaustoff eine Druckfestigkeit größer als 5 Megapascal, größer als 10 Megapascal bzw. größer als 15 Megapascal und im Speziellen größer als 20 Megapascal auf. Vorzugsweise entspricht der Bindebaustoff einer Druckfestigkeitsklasse von Mörtel besser als Mörtelklasse M 10, wobei sich die Mörtelklasse nach DIN EN 998-2:2015-11 bestimmt. In einer feineren Ausgestaltung des Bindebaustoffs lässt sich der Effekt auch auf Leichtmauermörtel u. a. der Mörtelklasse M 5 übertragen.

In einer besonders bevorzugten Ausgestaltung der Erfindung ist das Bindebaustoffzwischenprodukt eine Mischung von Wasser und Bindebaustoffmischung in einem Verhältnis größer als 0,8. Das Verhältnis von Wasser zu Bindebaustoffmischung ist vorzugsweise ein Volumenverhältnis. Alternativ ist das Verhältnis von Wasser zu Bindebaustoffmischung ein Massenverhältnis. Insbesondere ist die Bindebaustoffmischung durch eine Mischung von einem Teil Bindebaustoffmischung und mindestens einem Teil Wasser erhältlich. Insbesondere ist das Bindebaustoffzwischenprodukt eine Mischung von einem Teil Bindebaustoffmischung und mindestens 1,2 Teilen Wasser. Vorzugsweise ist das Verhältnis von Wasser zu Bindebaustoffmischung in dem Bindebaustoffzwischenprodukt kleiner als 2,0. Dieser Ausgestaltung liegt die Überlegung zugrunde, einen Bindebaustoff bereitzustellen, der eine gute Wärmedämmung aufweist, wobei das Bindebaustoffzwischenprodukt zur Applikation streichfähig und/oder fließfähig ist.

Optional ist es vorgesehen, dass der Bindebaustoff einen Portlandit-Anteil von kleiner als 11 Ma.-% aufweist. Vorzugsweise ist der Portlandit-Anteil kleiner als 8 Ma.-% und im Speziellen kleiner als 5 Ma.-%. Insbesondere ist es vorgesehen, dass der Bindebaustoff auf einem Portlandit-Abbau von mehr als 20 %, im Speziellen von mehr als 80 % basiert. Als Portlandit-Abbau wird der Abbau von Calciumhydroxid nach dem Hydratisieren der Bindebaustoffmischung während einer Aushärtezeit von mindestens 28 Tagen, vorzugsweise von weniger als 50 Tagen, verstanden. Der Portlandit-Abbau ist vorzugsweise auf eine Vergleichsprobe bezogen, die der Zusammensetzung der Bindebaustoffmischung entspricht, aber keine pyrogene Kieselsäure enthält, wobei der Anteil an pyrogener Kieselsäure in der Vergleichsprobe beispielsweise durch eine Bindebaustoffmischung substituiert ist.

In einer besonders bevorzugten Ausführung der Erfindung weist der Bindebaustoff ein spezifisches Porenvolumen von Poren im Mesoporenbereich von 0,05 cm³/g auf. Vorzugsweise weist der Bindebaustoff ein spezifisches Porenvolumen an Poren im Mesoporenbereich von größer als 0,1 cm³/g und im Speziellen von größer als 0,5 cm³/g auf. Insbesondere weist der Bindebaustoff ein spezifisches Gesamtporenvolumen größer als 2 cm³/g, vorzugsweise von größer als 5 cm³/g und im Speziellen von größer als 10 cm³/g auf. Das spezifische Gesamtporenvolumen ist insbesondere die Summe der Porenvolumina aller Poren im Bindebaustoff pro g Probe. Vorzugsweise ist das spezifische Porenvolumen der Poren im Mesoporenbereich größer als 0,5 cm/g und das spezifische Gesamtporenvolumen kleiner als 2 cm³/g. Die Poren im Mesoporenbereich sind Poren zwischen 50 und 2 Nanometer. Dieser Ausgestaltung liegt die Überlegung zugrunde, einen Bindebaustoff mit verbesserter Wärmedämmung durch Einführung und/oder Erhöhung der Poren im Mesoporenbereich bereitzustellen.

Eine Ausgestaltung der Erfindung sieht vor, dass der Bindebaustoff ein Porenvolumenverhältnis größer als 0,3 aufweist. Insbesondere ist das Porenvolumenverhältnis größer als 0,5 und im Speziellen größer als 1,5. Als Porenvolumenverhältnis wird das Verhältnis von Poren kleiner 50 Nanometer zu Poren zwischen 100 Nanometer und 1 Mikrometer verstanden. Dieser Ausgestaltung liegt die Überlegung zugrunde, dass mit dem steigenden Porenvolumenverhältnis die Wärmeleitfähigkeit sinkt.

In einer möglichen Ausgestaltung der Erfindung ist der mittlere Porendurchmesser gemittelt über alle Poren im Bindebaustoff kleiner als 1 Mikrometer. Im Speziellen ist der mittlere Porendurchmesser von Poren im Bindebaustoff kleiner als 0,7 Mikrometer und im Speziellen ist der mittlere Porendurchmesser im Bindebaustoff kleiner als 0,5 Mikrometer. Beispielsweise ist ein Bindebaustoff mit einem mittleren Porendurchmesser größer als 0,5 Mikrometer durch das Mischen einer Bindebaustoffmischung basierend auf 92 Ma.-% Zement und 12 Ma.-% pyrogener Kieselsäure, mit Wasser im Verhältnis 1:1 und ein mindestens 28 tägiges Aushärten erhältlich. Besonders bevorzugt ist es, dass der Bindebaustoff und/oder die Bindebaustoffmischung ein Mörtel, ein Dünnbettmörtel, ein Putz, ein Innen- oder Außenwandputz oder ein Beton ist. Der Mörtel ist insbesondere ein Mauermörtel, ein Putzmörtel zum Verputzen von Wänden und/oder Decken, ein Brandschutzmörtel, ein Kunstharzmörtel umfassend ungesättigte Polyesterharze oder Epoxidharze, ein Fugenmörtel, ein Estrichmörtel oder ein Wassermörtel. Insbesondere ist die Bindebaustoffmischung eine Mischung zum Erhalten von Mörtel, Dünnbettmörtel, Putz, Innen- oder Außenwandputz oder Beton durch das Mischen der Bindebaustoffmischung mit Wasser. Bei einer besonders bevorzugten Ausführungsform ist der Bindebaustoff ein Putzmörtel und im Speziellen ein Sockelputz.

Offenbart, aber nicht Teil der Erfindung, wird ein Verfahren zur Herstellung der Bindebaustoffmischung, wobei ein Anfangsvolumen von Mörtel in eine Fraktion größer 125 Mikrometer und eine Fraktion kleiner als 125 Mikrometer gesiebt wird, wobei ein Ersatzanteil der Fraktion größer als 125 Mikrometer durch pyrogene Kieselsäure ersetzt wird, wobei der Ersatzanteil zwischen 3 und 30 Ma.-% bezogen auf die Anfangsmasse beträgt.

Weitere Merkmale, Vorteile und Wirkungen der Erfindung ergeben sich aus der nachfolgenden Beschreibung bevorzugter Ausführungsbeispiele der Erfindung. Dabei zeigen:

Figur 1 eine Tabelle mit den in den Ausführungsbeispielen verwendeten Zusatzstoffen;
Figur 2a bis 2e Rezepturangaben mit Masseangaben der Ausführungsbeispiele;
Figur 3 Tabelle mit ausgewählten, physikalisch und werkstofftechnischen Eigenschaften von Bindebaustoffen unterschiedlicher Zusammensetzung;
Figur 4 eine Tabelle mit physikalischen und werkstofftechnischen Eigenschaften weiterer Ausführungsbeispiele, wobei das Optimum mit der Wärmeleitfähigkeit 0,15 W/mK hervorgehoben ist
Figur 5 eine grafische Darstellung der Druckfestigkeiten und Wärmeleitfähigkeiten einiger Ausführungsbeispiele;
Figur 6 eine grafische Darstellung von Messwerten der Tabelle aus Figur 4;
Figur 7 eine Tabelle mit Messwerten für Porengrößen und Porenvolumina;
Figur 8 eine Tabelle mit Messwerten für Porengrößen und Porenvolumina von weiteren Ausführungsbeispielen;
Figur 9 eine Darstellung des kumulativen Porenvolumens;
Figur 10 eine Darstellung des spezifischen Porenvolumens;
Figur 11 eine Darstellung des spezifischen Porenvolumens und Ausführungsbeispiele von Bindebaustoffen;
Figur 12a und 12b REM-Aufnahmen eines Ausführungsbeispiels des Bindebaustoffs und einer Nullprobe;
Figur 13 Vergleich des Portlandit-Gehalts mit einer Nullprobe mit einem Ausführungsbeispiel des Bindebaustoffs.

Im Folgenden werden als erfindungsgemäße Ausführungsbeispiele der Bindebaustoffe und Bindebaustoffmischungen verwendet:

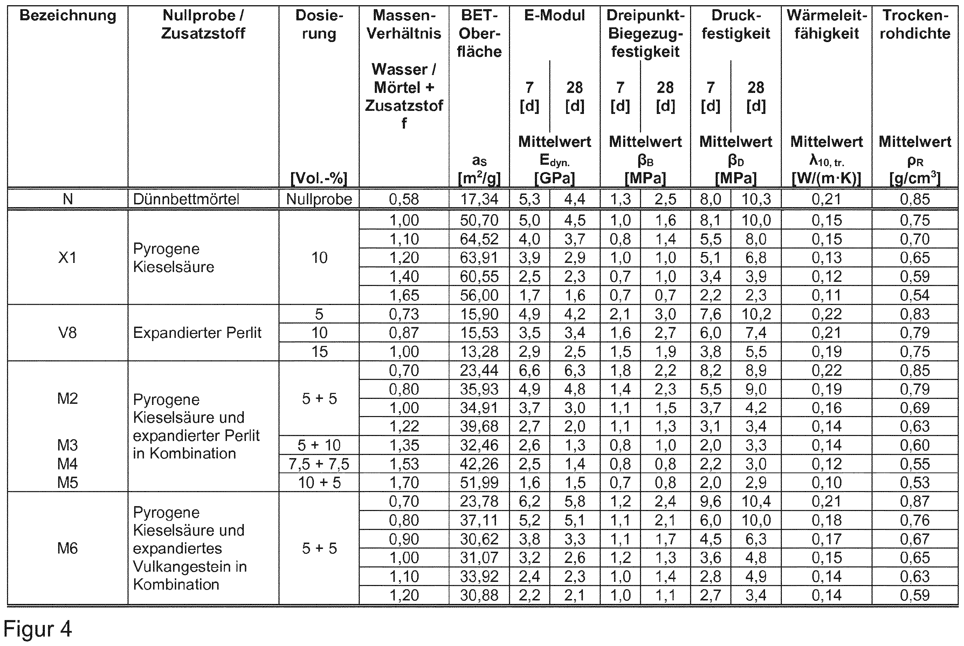

- Ausführungsbeispiel M1 aus Fig 4: 90 Vol.-% Mörtel + 10 Vol.-% pyrogene Kieselsäure
- Ausführungsbeispiel M2: 90 Vol.-% Mörtel + 5 Vol.-% pyrogene Kieselsäure + 5 Vol.-% expandierter Perlit
- Ausführungsbeispiel M3: 85 Vol.-% Mörtel + 5 Vol.-% pyrogene Kieselsäure + 10 Vol.-% expandierter Perlit
- Ausführungsbeispiel M4: 85 Vol.-% Mörtel + 7,5 Vol.-% pyrogene Kieselsäure + 7,5 Vol.-% expandierter Perlit
- Ausführungsbeispiel M5: 85 Vol.-% Mörtel + 10 Vol.-% pyrogene Kieselsäure + 5 Vol.-% expandierter Perlit
- Ausführungsbeispiel M6: 90 Vol.-% Mörtel + 5 Vol.-% pyrogene Kieselsäure + 5 Vol.-% expandiertes Vulkangestein

Zum Vergleich werden im Folgenden eine nicht erfindungsgemäße Nullprobe N und mehrere nicht erfindungsgemäße Vergleichsproben diskutiert:

- Nullprobe N: 100 Vol.-% Mörtel
- Vergleichsprobe V1: 90 Vol.-% Mörtel + 10 Vol.-% expandiertes Vulkangestein Sorte I
- Vergleichsprobe V2: 90 Vol.-% Mörtel + 10 Vol.-% expandiertes Vulkangestein Sorte II
- Vergleichsprobe V3: 90 Vol.-% Mörtel + 10 Vol.-% Glashohlkugeln
- Vergleichsprobe V4: 90 Vol.-% Mörtel + 10 Vol.-% Bimsmehl Sorte I
- Vergleichsprobe V5: 90 Vol.-% Mörtel + 10 Vol.-% Bimsmehl Sorte II
- Vergleichsprobe V6: 90 Vol.-% Mörtel + 10 Vol.-% Vermiculit
- Vergleichsprobe V7: 90 Vol.-% Mörtel + 10 Vol.-% Schmelzkammer-Granulat

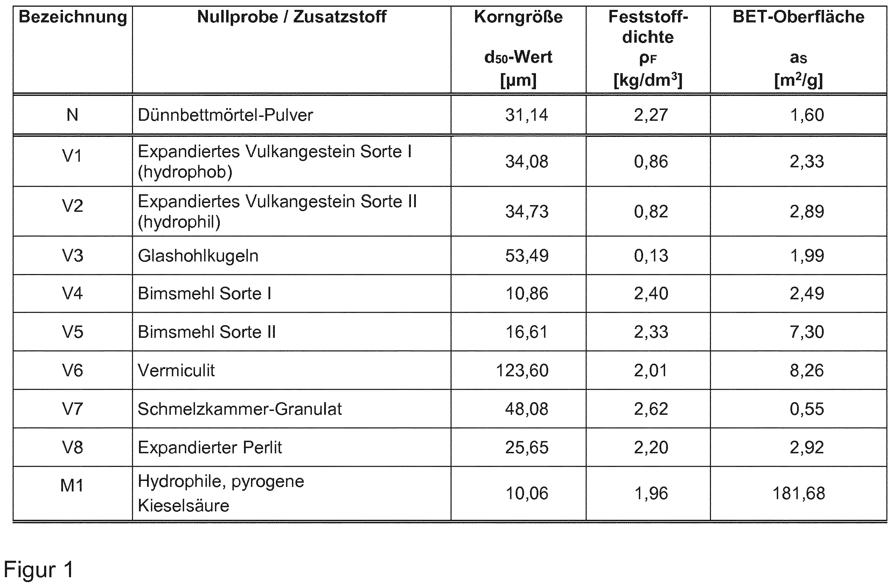

Figur 1 zeigt eine Tabelle mit den Eigenschaften der in den Ausführungsbeispielen verwendeten Zusatzstoffe. Ferner sind die Eigenschaften der Nullprobe N dargestellt, wobei die Nullprobe in der Tabelle als Dünnbettmörtelpulver bezeichnet wird und ein herkömmlicher Dünnbettmörtel ist.

Für die Nullprobe N finden sich als interessante Messgrößen die Korngröße mit einem dso Wert von 31,14 Mikrometer und die Feststoffdichte mit 2,27 kg/dm$^3$. In der Tabelle sind als Zuschläge Glashohlkugeln, Bimsmehl Sorte 1, Bimsmehl Sorte 2, Vermiculit und Schmelzkammergranulat aufgeführt. Als expandiertes Vulkangestein zeigt die Tabelle als verwendete Sorten eine Sorte 1 und eine Sorte 2, wobei die Sorte 1 ein hydrophobes expandiertes Vulkangestein ist und die Sorte 2 ein hydrophiles expandiertes Vulkangestein ist. Ebenso sind die Eigenschaften des expandierten Perlits und der verwendeten pyrogenen Kieselsäure gezeigt, wobei die pyrogene Kieselsäure hier eine hydrophile pyrogene Kieselsäure ist.

Die Korngrößen sind für das expandierte Vulkangestein in den erfindungsgemäßen Ausführungsbeispielen sowohl in Sorte 1 als auch in Sorte 2 in einer vergleichbaren Größenordnung und/oder etwas größer als die Korngröße der Nullprobe. Für den in den erfindungsgemäßen Ausführungsbeispielen und in den Vergleichsproben verwendeten expandierten Perlit und für die hydrophile pyrogene Kieselsäure ist die Korngröße geringer als die Korngröße der Nullprobe.

Die Feststoffdichten für das Bimsmehl Sorte 2, den expandierten Perlit, die Vulkangesteine und die pyrogene Kieselsäure sind kleiner als die Feststoffdichte der Nullprobe. Ebenso sind die BET-Oberflächen der Zuschläge, abgesehen von dem Schmelzkammergranulat, größer als die BET-Oberfläche des Mörtels. Die pyrogene Kieselsäure weist in den vorgestellten Ausführungsbeispielen eine BET-Oberfläche von 181,68 auf und somit eine mehr als 100-mal so große BET-Oberfläche wie der Mörtel.

Die Ausführungsbeispiele und die Vergleichsproben sind herstellbar, indem bspw. käuflicher Mörtel in Fraktionen unterschiedlicher Korngrößen gesiebt wird. Dabei wird der käufliche Mörtel in Fraktionen gesiebt kleiner 63 Mikrometer, kleiner 90 Mikrometer, kleiner 125 Mikrometer, kleiner 250 Mikrometer, kleiner 500 Mikrometer, größer 500 Mikrometer. Der ungesiebte, käufliche Mörtel weist insbesondere keine Partikel auf die größer sind als 1000 Mikrometer.

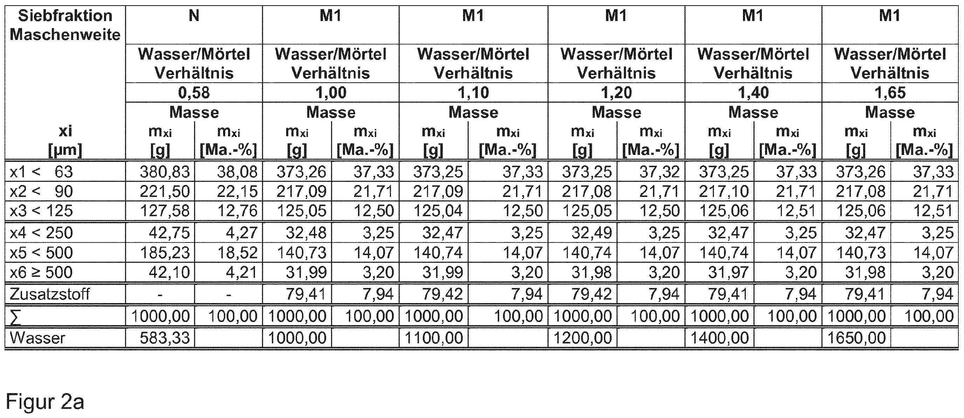

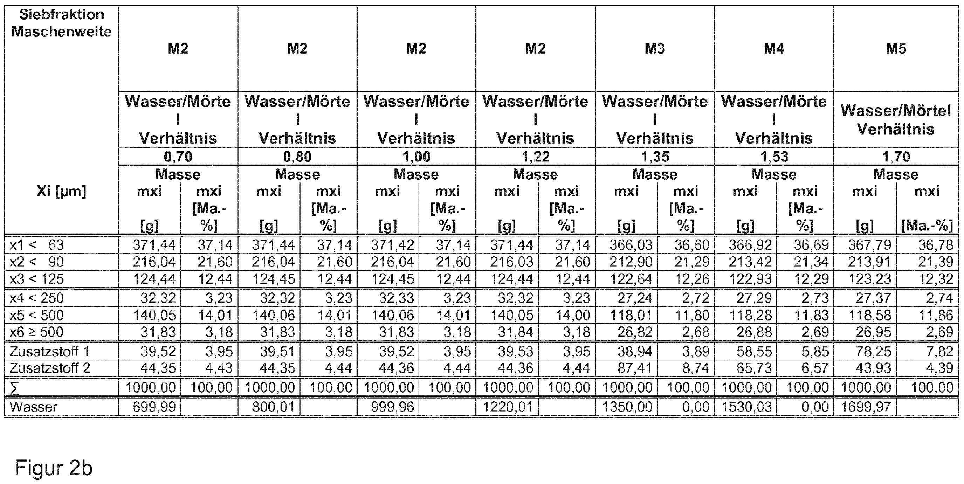

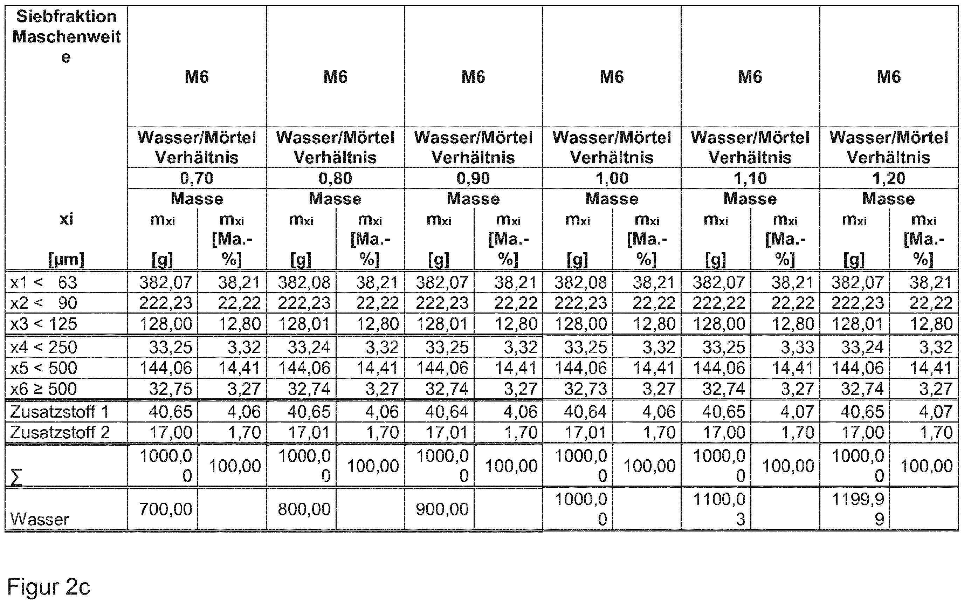

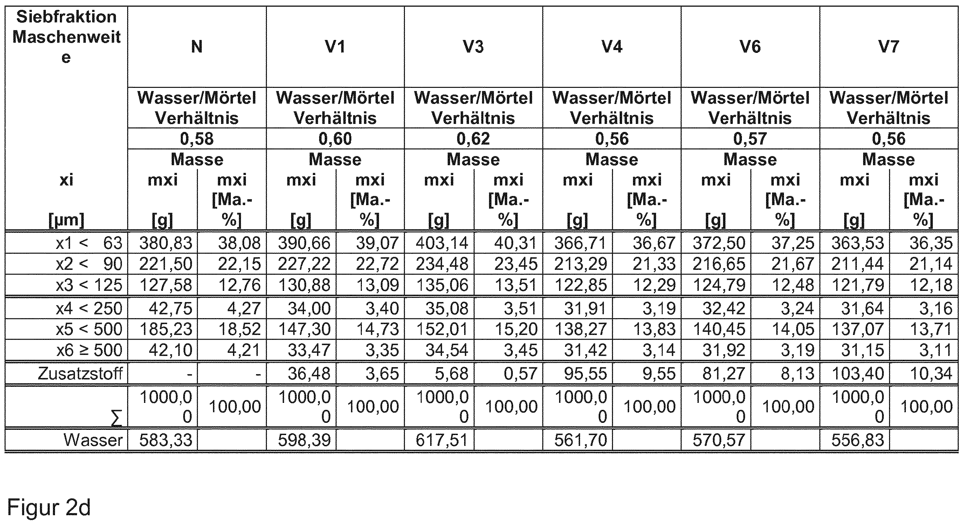

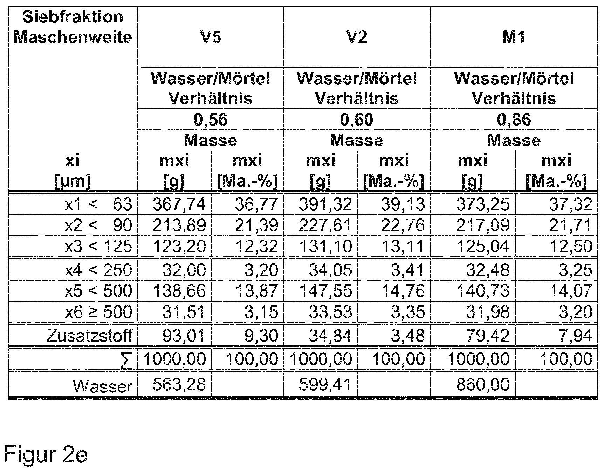

Die Figuren 2a bis 2e zeigen Rezepturangaben zur Herstellung der Ausführungsbeispiele der Vergleichsproben. Die Massen und/oder Massenprozent der einzelnen Komponenten sind jeweils angegeben. Ferner sind verwendete und/oder benötigte Wassermengen für unterschiedliche Wasserzusätze angegeben.

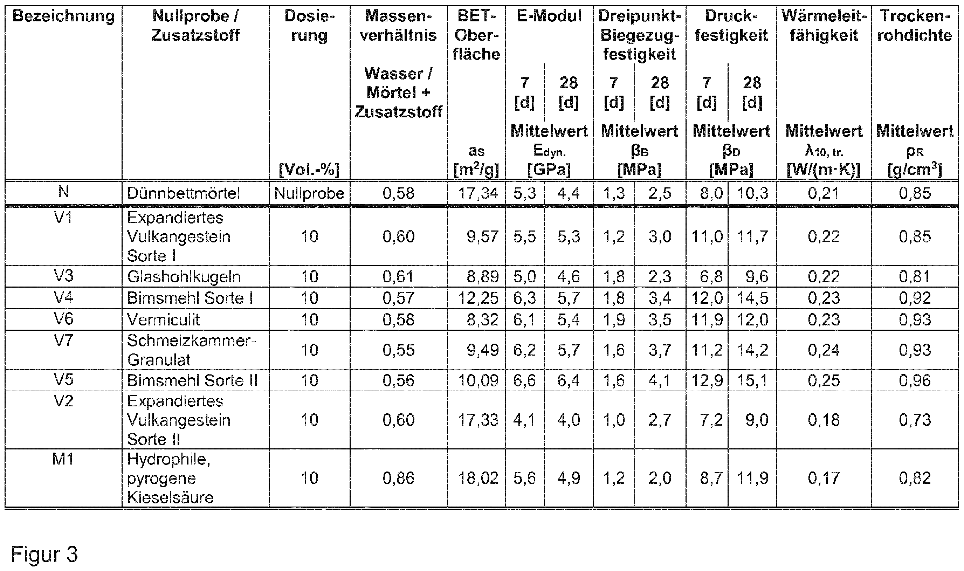

Figur 3 zeigt experimentell erhaltene physikalische und physikalisch-chemische Eigenschaften der Nullprobe N, des Ausführungsbeispiels M1 und der Vergleichsproben V1 bis V7. Spalte 3 zeigt das Wasser-zu-Bindebaustoffverhältnis, wobei sich zeigt, dass zum Mischen der Bindebaustoffmischung mit 10 % Kieselsäure mehr Wasser benötigt wird.

Die BET-Oberfläche der Nullprobe N beträgt hier 17,34 m$^2$/g. Für das Ausführungsbeispiel M1 aus Figur 3 wird die BET-Oberfläche geringfügig erhöht und beträgt hier 18,02 m$^2$/g. Für alle Vergleichsproben V1 bis V7 wurde die BET-Oberfläche im Vergleich zur Nullprobe gesenkt.

Der Elastizitätsmodul nach 28 Tagen ist in Spalte 6 angegeben. Der Elastizitätsmodul der Nullprobe N beträgt nach 28 Tagen 4,4 Gigapascal. Für alle Vergleichsproben abgesehen von der Vergleichsprobe V2 konnte der Elastizitätsmodul erhöht werden.

In Spalte 10 der Figur 3 sind die Druckfestigkeiten nach 28 Tagen gezeigt. Die Nullprobe N weist eine Druckfestigkeit von 10,3 Megapascal auf, was einer Druckfestigkeitsklasse eines Mörtels von M 10 entspricht. Für alle Vergleichsproben abgesehen von den Vergleichsproben V2 und V3 konnte die Druckfestigkeit nach 28 Tagen gesteigert werden.

In Spalte 11 der Figur 3 sind die Wärmeleitfähigkeiten dargestellt. Die Wärmeleitfähigkeit der Nullprobe N beträgt 0,21 Watt pro Meter mal Kelvin. Für Vergleichsproben abgesehen von der Vergleichsprobe V2 zeigt sich eine Steigerung der Wärmeleitfähigkeit. Für das expandierte Vulkangestein der Sorte 2 (Vergleichsprobe V2) und das Ausführungsbeispiel M1 ergab sich eine geringere Wärmeleitfähigkeit, wobei die Wärmeleitfähigkeit im Ausführungsbeispiel M1 sogar auf 0,17 Watt pro Meter mal Kelvin gesenkt werden konnte.

Figur 4 zeigt eine Tabelle mit physikalischen und werkstofftechnischen Eigenschaften der Nullprobe N und den Ausführungsbeispielen M1 bis M6. Ferner wurden die Mischungsverhältnisse von Wasser zu Bindebaustoffmischung variiert, wobei dieses Verhältnis in der Spalte 3 angetragen und angegeben ist.

Spalte 5 der Tabelle aus Figur 4 zeigt die BET-Oberflächen der Proben. Die BET-Oberfläche der Nullprobe N beträgt 17,34 m²/g. Für Ausführungsbeispiele M1 bis M6 wurde eine Steigerung der BET-Oberfläche gegenüber der Nullprobe gemessen. Für den Zusatz von expandiertem Perlit ohne Kieselsäure (Vergleichsprobe V8) wurde die BET-Oberfläche geringer als die der Nullprobe.

Die Druckfestigkeit der Nullprobe N nach 28 Tagen beträgt 10,3 Megapascal. Die Druckfestigkeit für die Ausführungsbeispiele und die Vergleichsprobe V8 sind ebenfalls in der Tabelle angegeben. Dabei ist ersichtlich, dass die Druckfestigkeit für ein steigendes Wassermörtelverhältnis innerhalb einer Probe und/oder Bindebaustoffmischung abnimmt.

Die Wärmeleitfähigkeit der Nullprobe N beträgt 0,21 Watt pro Meter mal Kelvin. Für alle Mischungen von Bindebaustoffmischungen die pyrogene Kieselsäure enthalten, also die Ausführungsbeispiele M1 bis M6, konnte eine Reduzierung und/oder ein Gleichbleiben der Wärmeleitfähigkeit erreicht werden. Ferner ist ersichtlich, dass für Ausführungsbeispiele die Wärmeleitfähigkeit durch Steigerung des Wasser-Bindebaustoffmischungsverhältnisses zugunsten des Wasseranteils gesenkt werden kann.

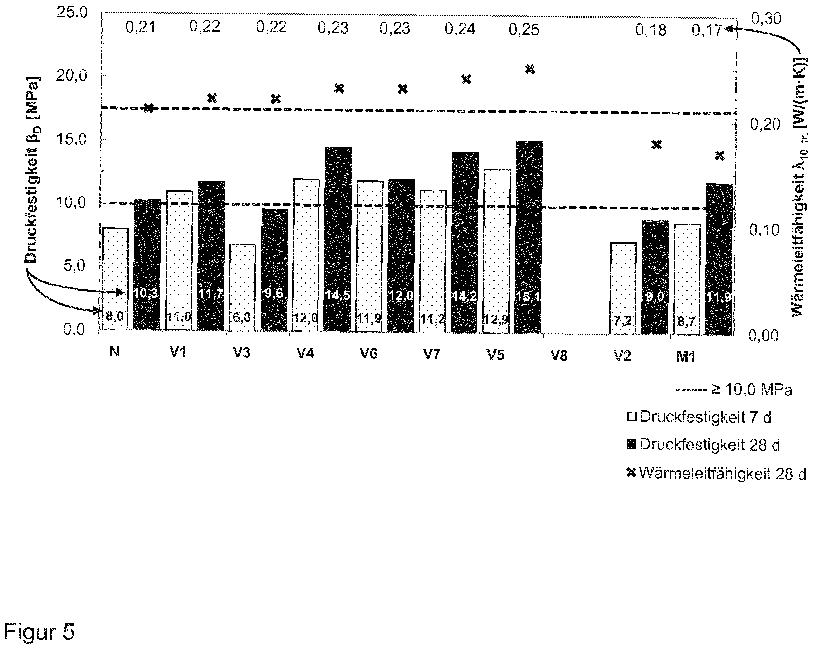

Figur 5 zeigt eine grafische Darstellung der Druckfestigkeiten und Wärmeleitfähigkeiten von Ausführungsbeispielen, Vergleichsproben und der Nullprobe. Diese Darstellung zeigt insbesondere eine Korrelation der Druckfähigkeit und der Wärmeleitfähigkeit. Abgesehen von dem Ausführungsbeispiel M1 aus Figur 3, führt ein Ansteigen der Druckfestigkeit zu einem Ansteigen der Wärmeleitfähigkeit. Für das Ausführungsbeispiel M1 aus Figur 3 sind ein Anstieg in der Druckfestigkeit und eine Reduktion in der Wärmeleitfähigkeit zu verzeichnen.

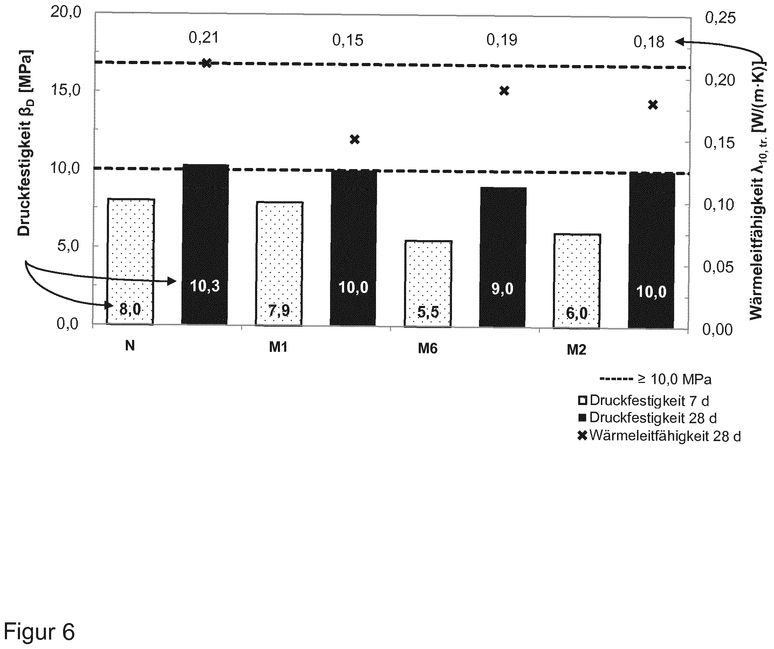

Figur 6 zeigt eine grafische Darstellung von Messwerten der Tabelle aus Figur 4. Dabei ist der Figur 6 zu entnehmen, dass die Wärmeleitfähigkeiten für die Ausführungsbeispiele M1, M2 und M6 aus Figur 4 reduziert werden konnten. Die Druckfestigkeitsklasse M 10 weisen die Ausführungsbeispiele M1 und M2 aus Figur 4 auf.

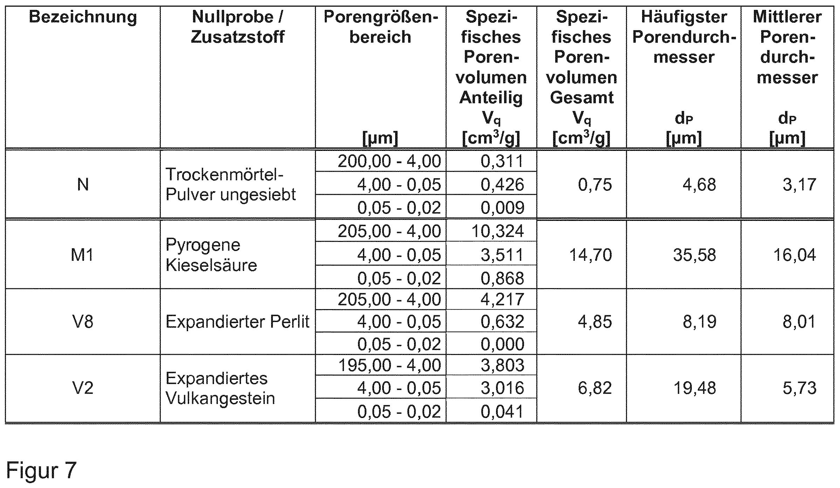

Figur 7 zeigt für die Pulverproben eine Tabelle mit Messwerten für Porengröße, spezifisches anteiliges Porenvolumen und spezifisches Gesamtporenvolumen, häufigster Porendurchmesser und mittlerer Porendurchmesser für die Nullprobe, das Ausführungsbeispiel M1 aus Figur 1 und die Vergleichsproben V2 und V8 aus Figur 1.

Der in Figur 7 gezeigten Tabelle ist zu entnehmen, dass für das Ausführungsbeispiel M1 und die Vergleichsproben V2 und V8 der häufigste Porendurchmesser gesteigert werden konnte. Ebenso wurde für das Ausführungsbeispiel M1 und die Vergleichsproben V2 und V8 der mittlere Porendurchmesser im Vergleich zur Nullprobe N gesteigert. Der Bereich der Mesoporen, welche in dem Porenbereich zwischen 0,05 und 0,02 Mikrometer aufgeführt sind, ist eine Steigerung des spezifischen Porenvolumens anteilig für die pyrogene Kieselsäure zu verzeichnen. Ebenso konnte der Zusatz von expandiertem Vulkangestein das anteilige spezifische Porenvolumen von Mesoporen steigern.

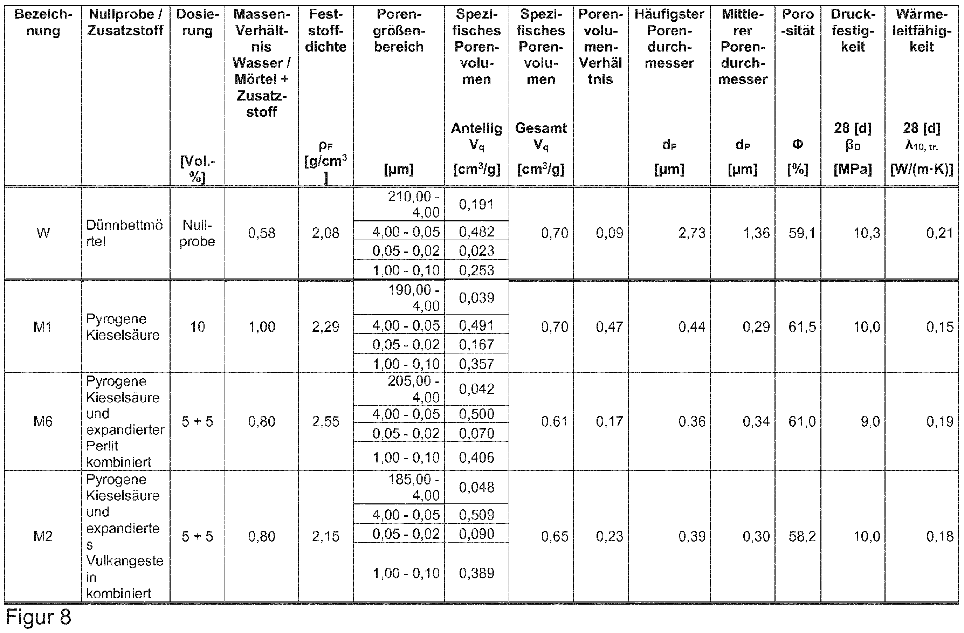

Figur 8 zeigt eine Tabelle wie in Figur 7 für die Nullprobe und für die Ausführungsbeispiele M1, M6 und M2. Der Dünnbettmörtel als Nullprobe N weist ein anteiliges spezifisches Porenvolumen von 0,0253 Kubikzentimeter pro Gramm für Mesoporen auf. Für die Ausführungsbeispiele M1, M2 und M6 konnte das anteilige spezifische Porenvolumen im Mesoporenbereich im Bindebaustoff gegenüber der Nullprobe N gesteigert werden. Der mittlere Porendurchmesser konnte für die Ausführungsbeispiele M1, M2 und M6 im Vergleich zur Nullprobe gesenkt werden.

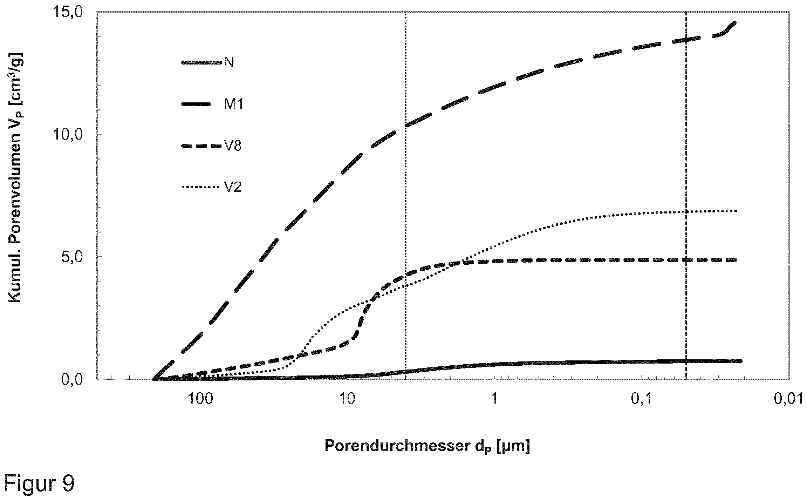

Figur 9 zeigt eine grafische Darstellung der kumulativen Porenvolumina zum Porendurchmesser für das Ausführungsbeispiel M1 aus Figur 7 und die Vergleichsproben V2 und V8 verschiedener Bindebaustoffmischungen gegenüber einer Nullprobe. Dabei ist auffällig, dass für das Ausführungsbeispiel M1 ein massiver Anstieg des kumulativen Porenvolumens im Bereich des Mesoporenbereichs (Porendurchmesser kleiner als 50 nm) aufzufinden ist. Für die Nullprobe und die Vergleichsproben V2 und V8 ist dieser Anstieg in dem kumulativen Porenvolumen im Mesoporenbereich nicht zu verzeichnen.

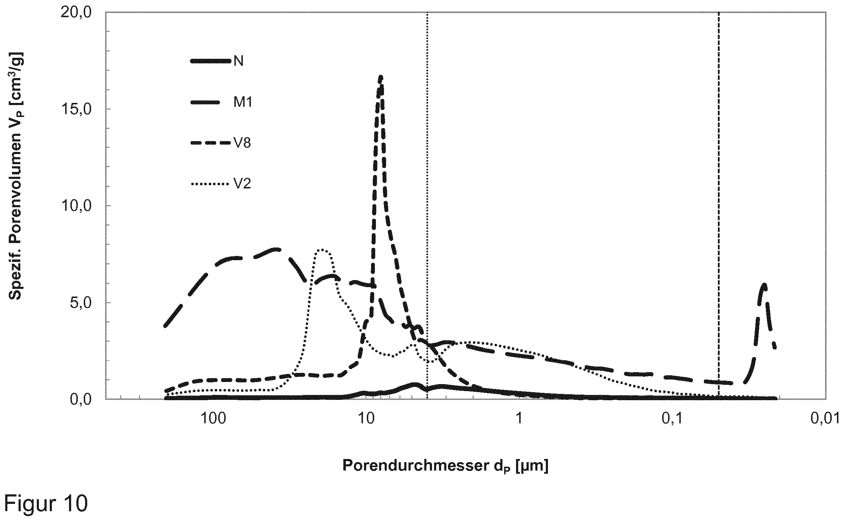

Figur 10 zeigt eine Darstellung des spezifischen Porenvolumens in Abhängigkeit vom Porendurchmesser. Für das Ausführungsbeispiel M1 aus Figur 7 ist ein Anstieg des spezifischen Porenvolumens im Mesoporenbereich zu verzeichnen. Ein solcher Anstieg ist für die Nullprobe und die Vergleichsproben V2 und V8 nicht zu verzeichnen.

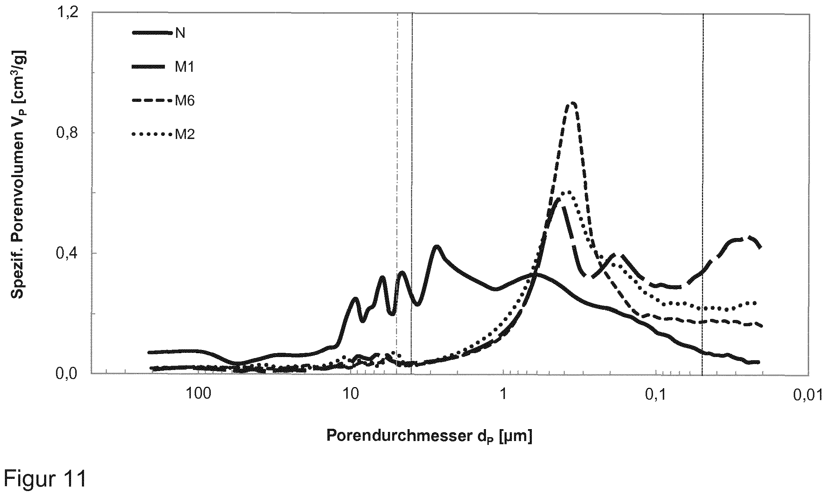

Figur 11 zeigt ebenso eine Darstellung des spezifischen Porenvolumens zum Porendurchmesser für eine Nullprobe und für die Ausführungsbeispiele M1, M2 und M6 aus Figur 6. Dabei ist ersichtlich, dass die Ausführungsbeispiele M1, M2 und M6 ein spezifisches Porenvolumen im Mesoporenbereich aufweisen, welche größer ist als das spezifische Porenvolumen im Mesoporenbereich der Nullprobe N. Die Mesoporen liegen hier im Bereich unter 0,1 Mikrometer.

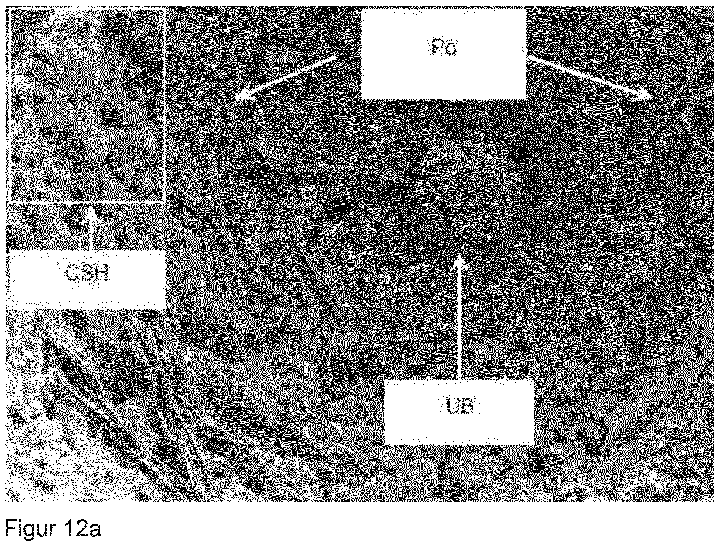

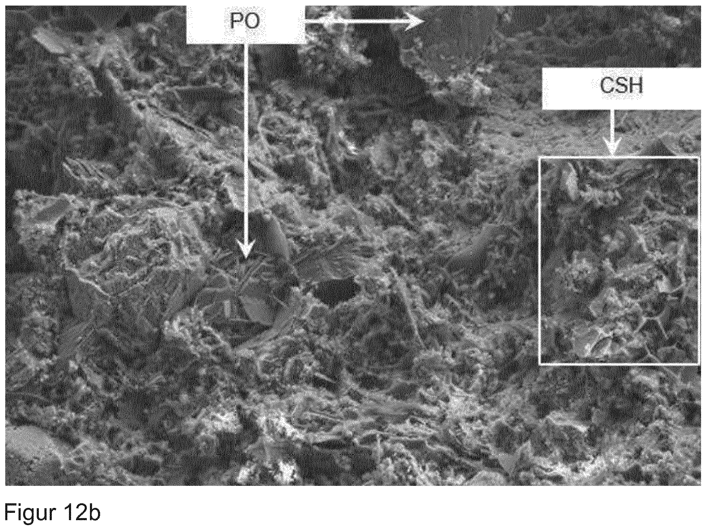

Figur 12a zeigt eine Rasterelektronenmikroskop-Aufnahme eines Bindebaustoffs mit der Zusammensetzung der Nullprobe N. Der Bindebaustoff wurde 28 Tage ausgehärtet und mit einer 500-fachen Vergrößerung aufgenommen. Die Aufnahme zeigt, dass sich bei der Nullprobe an den Poreninnenwänden Portlandit Po plattenförmig ablagert. Ferner ist in der Aufnahme 12a das geringfügige Vorhandensein von Ettringit und CSH-Phasen zu erkennen. Ein unreagierter Bestandteil UB ist in der Pore eingebettet. Figur 12b zeigt eine Rasterelektronenmikroskop-Aufnahme eines Bindebaustoffs mit der Zusammensetzung M1 aus Figur 4. Die Aufnahme zeigt die flächige Verteilung von CSH-Phasen und ein geringeres Vorkommen von Portlandit PO.

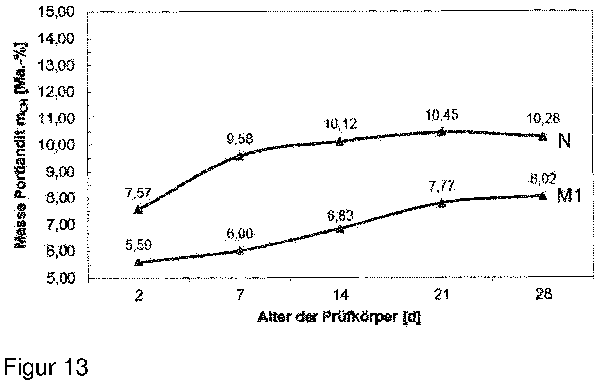

Figur 13 zeigt den Vergleich des Portlandit-Gehalts eines Bindebaustoffs mit der Zusammensetzung M1 aus Figur 4 und eines Bindebaustoffs mit der Zusammensetzung der Nullprobe N. Die Grafik zeigt, dass für einen Bindebaustoff mit der Zusammensetzung M1 aus Figur 4 der Anteil des Portlandits nach 28 Tagen um mehr als 2 Masseprozent geringer ist als bei der Nullprobe N. Der Portlandit-Abbau beträgt nach 28 Tagen für die Bindebaustoffmischung M1 aus Figur 4 bezogen auf die Nullprobe etwa 22 Prozent.

**Patentansprüche**

1. Bindebaustoffmischung auf Zementbasis enthaltend

   - mindestens 50 Ma.-% Zement,
   - 3 bis 30 Ma.-% pyrogene Kieselsäure, und
   - 3 bis 20 Ma.-% expandierten Perlit aufweisend eine Korngröße zwischen 20 Mikrometer und 50 Mikrometer.

2. Bindebaustoffmischung nach Anspruch 1, des Weiteren enthaltend 1 bis 40 Ma.-% Zusatzstoff.

3. Bindebaustoffmischung nach Anspruch 1 oder 2, **dadurch gekennzeichnet, dass** die Bindebaustoffmischung einen Anteil von weniger als 25 Ma.-% an Partikeln größer 125 Mikrometern aufweist.

4. Bindebaustoffmischung nach einem der vorherigen Ansprüche, des Weiteren enthaltend 1 bis 20 Ma.-% expandiertes Vulkangestein.

5. Bindebaustoffmischung nach Anspruch 4, **dadurch gekennzeichnet, dass** das expandierte Vulkangestein eine Korngröße kleiner als 50 Mikrometer aufweist.

6. Bindebaustoffmischung nach einem der vorherigen Ansprüche, **dadurch gekennzeichnet, dass** die pyrogene Kieselsäure eine BET-Oberfläche größer 50 $m^2$/g aufweist bestimmt im BET-Gasadsorptions-Verfahren.

7. Bindebaustoff, erhältlich durch Mischung der Bindebaustoffmischung nach einem der vorherigen Ansprüche mit Wasser zu einem Bindebaustoffzwischenprodukt und mindestens einem 28-tägigem Aushärten des Bindebaustoffzwischenprodukts zum Bindebaustoff.

8. Bindebaustoff nach Anspruch 7, **dadurch gekennzeichnet, dass** das Bindebaustoffzwischenprodukt eine Mischung von Wasser und Bindebaustoffmischung in einem Masseverhältnis größer 0,8 ist.

9. Bindebaustoff nach Anspruch 7 oder 8, **gekennzeichnet durch** einen Portlandit-Anteil von kleiner als 10 Ma.-%.

10. Bindebaustoff nach einem der Ansprüche 7 bis 9, **gekennzeichnet durch** ein spezifisches Porenvolumen von größer als 0,05 $cm^3$/g der Poren im Bindebaustoff im Mesoporenbereich von 2 bis 50 nm.

11. Bindebaustoff nach einem der Ansprüche 7 bis 10, **dadurch gekennzeichnet, dass** der mittlere Porendurchmesser gemittelt über alle Poren im Bindebaustoff kleiner als 1 Mikrometer ist und/oder der Bindebaustoff ein Porenvolumenverhältnis größer als 0.3 aufweist, wobei das Porenvolumenverhältnis als das Verhältnis von Poren kleiner 50 Nanometer zu Poren zwischen 100 Nanometer und 1 Mikrometer definiert ist.

12. Bindebaustoff nach einem der Ansprüche 7 bis 11, **dadurch gekennzeichnet, dass** der Bindebaustoff und/oder die Bindebaustoffmischung ein Dünnbettmörtel, ein Putz, ein Putzmörtel, ein Sockelputz, ein Innen- oder Außenwandputz oder Beton ist.

**Claims**

1. A binder construction material mixture based on cement, containing

   - at least 50 mass% of cement,
   - 3 to 30 mass% of pyrogenic silica, and
   - 3 to 20 mass% of expanded perlite having a particle size of between 20 micrometers and 50 micrometers.

**2.** The binder construction material mixture according to Claim 1, further containing 1 to 40 mass% of an additive.

**3.** The binder construction material mixture according to Claim 1 or 2, **characterized in that** the binder construction material mixture has a proportion of less than 25 mass% of particles larger than 125 micrometers.

**4.** The binder construction material mixture according to any of the preceding Claims, further containing 1 to 20 mass% of expanded volcanic rock.

**5.** The binder construction material mixture according to Claim 4, **characterized in that** the expanded volcanic rock has a particle size less than 50 micrometers.

**6.** The binder construction material mixture according to any of the preceding Claims, **characterized in that** the pyrogenic silica has a BET surface area greater than 50 m$^2$/g, determined in the BET gas adsorption method.

**7.** A binder construction material, obtainable by mixing the binder construction material mixture according to any of the preceding Claims with water to form a binder construction material intermediate and by at least one 28-day cure of the binder construction material intermediate to form the binder construction material.

**8.** The binder construction material according to Claim 7, **characterized in that** the binder construction material intermediate is a mixture of water and a binder construction material mixture in a mass ratio greater than 0.8.

**9.** The binder construction material according to Claim 7 or 8, **characterized by** a portlandite proportion of less than 10 mass%.

**10.** The binder construction material according to any of Claims 7 to 9, **characterized by** a specific pore volume greater than 0.05 cm$^3$/g of the pores in the binder construction material in the mesopore range of 2 to 50 nm.

**11.** The binder construction material according to any of Claims 7 to 10, **characterized in that** the average pore diameter, as averaged across all pores in the binder construction material, is less than 1 micrometer, and/or the binder construction material has a pore volume ratio greater than 0.3, the pore volume ratio being defined as the ratio of pores smaller than 50 nanometers to pores between 100 nanometers and 1 micrometer.

**12.** The binder construction material according to any of Claims 7 to 11, **characterized in that** the binder construction material and/or the binder construction material mixture is a thin-bed mortar, a render, a render mortar, a wall-base render, an internal or external wall render, or concrete.

**Revendications**

**1.** Mélange de matériau de construction liant à base de ciment contenant

- au moins 50 % en masse de ciment,
- 3 à 30 % en masse de silice pyrogénée, et
- 3 à 20 % en masse de perlite expansée,

présentant une granulométrie comprise entre 20 micromètres et 50 micromètres.

**2.** Mélange de matériau de construction liant selon la revendication 1, contenant en outre de 1 à 40 % en masse d'additif.

**3.** Mélange de matériau de construction liant selon la revendication 1 ou 2, **caractérisé en ce que** le mélange de matériau de construction liant présente une proportion inférieure à 25 % en masse de particules supérieures à 125 micromètres.

**4.** Mélange de matériau de construction liant selon l'une quelconque des revendications précédentes, contenant en outre de 1 à 20 % en masse de roche volcanique expansée.

**5.** Mélange de matériau de construction liant selon la revendication 4, **caractérisé en ce que** la roche volcanique expansée présente une granulométrie inférieure à 50 micromètres.

6. Mélange de matériau de construction liant selon l'une quelconque des revendications précédentes, **caractérisé en ce que** la silice pyrogénée présente une surface BET supérieure à 50 m$^2$/g, déterminée par le procédé d'adsorption de gaz BET.

7. Matériau de construction liant, pouvant être obtenu par mélange du mélange de matériau de construction liant selon l'une quelconque des revendications précédentes avec de l'eau pour former un produit intermédiaire de matériau de construction liant et au moins un durcissement de 28 jours du produit intermédiaire de matériau de construction liant pour former le matériau de construction liant.

8. Matériau de construction liant selon la revendication 7, **caractérisé en ce que** le produit intermédiaire de matériau de construction liant est un mélange d'eau et de mélange de matériau de construction liant en un rapport massique supérieur à 0,8.

9. Matériau de construction liant selon la revendication 7 ou 8, **caractérisé par** une proportion de portlandite inférieure à 10 % en masse.

10. Matériau de construction liant selon l'une quelconque des revendications 7 à 9, **caractérisé par** un volume poreux spécifique supérieur à 0,05 cm$^3$/g de pores dans le matériau de construction liant dans la plage des mésopores allant de 2 à 50 nm.

11. Matériau de construction liant selon l'une quelconque des revendications 7 à 10, **caractérisé en ce que** le diamètre de pore moyen, moyenné sur tous les pores dans le matériau de construction liant, est inférieur à 1 micromètre et/ou **en ce que** le matériau de construction liant présente un rapport volumétrique des pores supérieur à 0,3, le rapport volumétrique des pores étant défini comme le rapport entre les pores inférieurs à 50 nanomètres et les pores compris entre 100 nanomètres et 1 micromètre.

12. Matériau de construction liant selon l'une quelconque des revendications 7 à 11, **caractérisé en ce que** le matériau de construction liant et/ou le mélange de matériau de construction liant est un mortier en couche mince, un enduit, un mortier d'enduit, un enduit de soubassement, un enduit de mur intérieur ou extérieur ou du béton.

| Bezeichnung | Nullprobe / Zusatzstoff | Korngröße<br><br>$d_{50}$-Wert<br>[µm] | Feststoff-<br>dichte<br>$\rho_F$<br>[kg/dm³] | BET-Oberfläche<br><br>$a_s$<br>[m²/g] |
|---|---|---|---|---|
| N | Dünnbettmörtel-Pulver | 31,14 | 2,27 | 1,60 |
| V1 | Expandiertes Vulkangestein Sorte I (hydrophob) | 34,08 | 0,86 | 2,33 |
| V2 | Expandiertes Vulkangestein Sorte II (hydrophil) | 34,73 | 0,82 | 2,89 |
| V3 | Glashohlkugeln | 53,49 | 0,13 | 1,99 |
| V4 | Bimsmehl Sorte I | 10,86 | 2,40 | 2,49 |
| V5 | Bimsmehl Sorte II | 16,61 | 2,33 | 7,30 |
| V6 | Vermiculit | 123,60 | 2,01 | 8,26 |
| V7 | Schmelzkammer-Granulat | 48,08 | 2,62 | 0,55 |
| V8 | Expandierter Perlit | 25,65 | 2,20 | 2,92 |
| M1 | Hydrophile, pyrogene Kieselsäure | 10,06 | 1,96 | 181,68 |

Figur 1

| Siebfraktion Maschenweite | N | | M1 | | M1 | | M1 | | M1 | | M1 | |
|---|---|---|---|---|---|---|---|---|---|---|---|---|
| | Wasser/Mörtel Verhältnis | | Wasser/Mörtel Verhältnis | | Wasser/Mörtel Verhältnis | | Wasser/Mörtel Verhältnis | | Wasser/Mörtel Verhältnis | | Wasser/Mörtel Verhältnis | |
| | 0,58 | | 1,00 | | 1,10 | | 1,20 | | 1,40 | | 1,65 | |
| | Masse | | Masse | | Masse | | Masse | | Masse | | Masse | |
| $xi$ [µm] | $m_{xi}$ [g] | $m_{xi}$ [Ma.-%] | $m_{xi}$ [g] | $m_{xi}$ [Ma.-%] | $m_{xi}$ [g] | $m_{xi}$ [Ma.-%] | $m_{xi}$ [g] | $m_{xi}$ [Ma.-%] | $m_{xi}$ [g] | $m_{xi}$ [Ma.-%] | $m_{xi}$ [g] | $m_{xi}$ [Ma.-%] |
| x1 < 63 | 380,83 | 38,08 | 373,26 | 37,33 | 373,25 | 37,33 | 373,25 | 37,32 | 373,25 | 37,33 | 373,26 | 37,33 |
| x2 < 90 | 221,50 | 22,15 | 217,09 | 21,71 | 217,09 | 21,71 | 217,08 | 21,71 | 217,10 | 21,71 | 217,08 | 21,71 |
| x3 < 125 | 127,58 | 12,76 | 125,05 | 12,50 | 125,04 | 12,50 | 125,05 | 12,50 | 125,06 | 12,51 | 125,06 | 12,51 |
| x4 < 250 | 42,75 | 4,27 | 32,48 | 3,25 | 32,47 | 3,25 | 32,49 | 3,25 | 32,47 | 3,25 | 32,47 | 3,25 |
| x5 < 500 | 185,23 | 18,52 | 140,73 | 14,07 | 140,74 | 14,07 | 140,74 | 14,07 | 140,74 | 14,07 | 140,73 | 14,07 |
| x6 ≥ 500 | 42,10 | 4,21 | 31,99 | 3,20 | 31,99 | 3,20 | 31,98 | 3,20 | 31,97 | 3,20 | 31,98 | 3,20 |
| Zusatzstoff | - | - | 79,41 | 7,94 | 79,42 | 7,94 | 79,42 | 7,94 | 79,41 | 7,94 | 79,41 | 7,94 |
| Σ | 1000,00 | 100,00 | 1000,00 | 100,00 | 1000,00 | 100,00 | 1000,00 | 100,00 | 1000,00 | 100,00 | 1000,00 | 100,00 |
| Wasser | 583,33 | | 1000,00 | | 1100,00 | | 1200,00 | | 1400,00 | | 1650,00 | |

Figur 2a

| Siebfraktion Maschenweite | M2 | | M2 | | M2 | | M2 | | M3 | | M4 | | M5 | |
| | Wasser/Mörtel Verhältnis 0,70 | | Wasser/Mörtel Verhältnis 0,80 | | Wasser/Mörtel Verhältnis 1,00 | | Wasser/Mörtel Verhältnis 1,22 | | Wasser/Mörtel Verhältnis 1,35 | | Wasser/Mörtel Verhältnis 1,53 | | Wasser/Mörtel Verhältnis 1,70 | |
| | Masse | | Masse | | Masse | | Masse | | Masse | | Masse | | Masse | |
| $X_i$ [µm] | $m_{xi}$ [g] | $m_{xi}$ [Ma.-%] | $m_{xi}$ [g] | $m_{xi}$ [Ma.-%] | $m_{xi}$ [g] | $m_{xi}$ [Ma.-%] | $m_{xi}$ [g] | $m_{xi}$ [Ma.-%] | $m_{xi}$ [g] | $m_{xi}$ [Ma.-%] | $m_{xi}$ [g] | $m_{xi}$ [Ma.-%] | $m_{xi}$ [g] | $m_{xi}$ [Ma.-%] |
|---|---|---|---|---|---|---|---|---|---|---|---|---|---|---|
| $x1 < 63$ | 371,44 | 37,14 | 371,44 | 37,14 | 371,42 | 37,14 | 371,44 | 37,14 | 366,03 | 36,60 | 366,92 | 36,69 | 367,79 | 36,78 |
| $x2 < 90$ | 216,04 | 21,60 | 216,04 | 21,60 | 216,04 | 21,60 | 216,03 | 21,60 | 212,90 | 21,29 | 213,42 | 21,34 | 213,91 | 21,39 |
| $x3 < 125$ | 124,44 | 12,44 | 124,45 | 12,44 | 124,45 | 12,44 | 124,44 | 12,44 | 122,64 | 12,26 | 122,93 | 12,29 | 123,23 | 12,32 |
| $x4 < 250$ | 32,32 | 3,23 | 32,32 | 3,23 | 32,33 | 3,23 | 32,32 | 3,23 | 27,24 | 2,72 | 27,29 | 2,73 | 27,37 | 2,74 |
| $x5 < 500$ | 140,05 | 14,01 | 140,06 | 14,01 | 140,06 | 14,01 | 140,05 | 14,00 | 118,01 | 11,80 | 118,28 | 11,83 | 118,58 | 11,86 |
| $x6 \geq 500$ | 31,83 | 3,18 | 31,83 | 3,18 | 31,83 | 3,18 | 31,84 | 3,18 | 26,82 | 2,68 | 26,88 | 2,69 | 26,95 | 2,69 |
| Zusatzstoff 1 | 39,52 | 3,95 | 39,51 | 3,95 | 39,52 | 3,95 | 39,53 | 3,95 | 38,94 | 3,89 | 58,55 | 5,85 | 78,25 | 7,82 |
| Zusatzstoff 2 | 44,35 | 4,43 | 44,35 | 4,44 | 44,36 | 4,44 | 44,36 | 4,44 | 87,41 | 8,74 | 65,73 | 6,57 | 43,93 | 4,39 |
| Σ | 1000,00 | 100,00 | 1000,00 | 100,00 | 1000,00 | 100,00 | 1000,00 | 100,00 | 1000,00 | 100,00 | 1000,00 | 100,00 | 1000,00 | 100,00 |
| Wasser | 699,99 | | 800,01 | | 999,96 | | 1220,01 | | 1350,00 | | 1530,03 | | 1699,97 | |

Figur 2b

14

| Siebfraktion Maschenweite | M6 Wasser/Mörtel Verhältnis 0,70 | | M6 Wasser/Mörtel Verhältnis 0,80 | | M6 Wasser/Mörtel Verhältnis 0,90 | | M6 Wasser/Mörtel Verhältnis 1,00 | | M6 Wasser/Mörtel Verhältnis 1,10 | | M6 Wasser/Mörtel Verhältnis 1,20 | |
|---|---|---|---|---|---|---|---|---|---|---|---|---|
| $x_i$ [µm] | Masse $m_{xi}$ [g] | $m_{xi}$ [Ma.-%] | Masse $m_{xi}$ [g] | $m_{xi}$ [Ma.-%] | Masse $m_{xi}$ [g] | $m_{xi}$ [Ma.-%] | Masse $m_{xi}$ [g] | $m_{xi}$ [Ma.-%] | Masse $m_{xi}$ [g] | $m_{xi}$ [Ma.-%] | Masse $m_{xi}$ [g] | $m_{xi}$ [Ma.-%] |
| $x_1 < 63$ | 382,07 | 38,21 | 382,08 | 38,21 | 382,07 | 38,21 | 382,08 | 38,21 | 382,07 | 38,21 | 382,07 | 38,21 |
| $x_2 < 90$ | 222,23 | 22,22 | 222,23 | 22,22 | 222,23 | 22,22 | 222,23 | 22,22 | 222,22 | 22,22 | 222,23 | 22,22 |
| $x_3 < 125$ | 128,00 | 12,80 | 128,01 | 12,80 | 128,01 | 12,80 | 128,00 | 12,80 | 128,00 | 12,80 | 128,01 | 12,80 |
| $x_4 < 250$ | 33,25 | 3,32 | 33,24 | 3,32 | 33,25 | 3,32 | 33,25 | 3,32 | 33,25 | 3,33 | 33,24 | 3,32 |
| $x_5 < 500$ | 144,06 | 14,41 | 144,06 | 14,41 | 144,06 | 14,41 | 144,06 | 14,41 | 144,06 | 14,41 | 144,06 | 14,41 |
| $x_6 \geq 500$ | 32,75 | 3,27 | 32,74 | 3,27 | 32,74 | 3,27 | 32,73 | 3,27 | 32,74 | 3,27 | 32,74 | 3,27 |
| Zusatzstoff 1 | 40,65 | 4,06 | 40,65 | 4,06 | 40,64 | 4,06 | 40,64 | 4,06 | 40,65 | 4,07 | 40,65 | 4,07 |
| Zusatzstoff 2 | 17,00 | 1,70 | 17,01 | 1,70 | 17,01 | 1,70 | 17,01 | 1,70 | 17,00 | 1,70 | 17,00 | 1,70 |
| Σ | 1000,00 | 100,00 | 1000,00 | 100,00 | 1000,00 | 100,00 | 1000,00 | 100,00 | 1000,00 | 100,00 | 1000,00 | 100,00 |
| Wasser | 700,00 | | 800,00 | | 900,00 | | 1000,00 | | 1100,03 | | 1199,99 | |

Figur 2c

| Siebfraktion Maschenweite | N | | V1 | | V3 | | V4 | | V6 | | V7 | |
|---|---|---|---|---|---|---|---|---|---|---|---|---|
| | Wasser/Mörtel Verhältnis | | Wasser/Mörtel Verhältnis | | Wasser/Mörtel Verhältnis | | Wasser/Mörtel Verhältnis | | Wasser/Mörtel Verhältnis | | Wasser/Mörtel Verhältnis | |
| | 0,58 | | 0,60 | | 0,62 | | 0,56 | | 0,57 | | 0,56 | |
| | Masse | | Masse | | Masse | | Masse | | Masse | | Masse | |
| $x_i$ [µm] | mxi [g] | mxi [Ma.-%] | mxi [g] | mxi [Ma.-%] | mxi [g] | mxi [Ma.-%] | mxi [g] | mxi [Ma.-%] | mxi [g] | mxi [Ma.-%] | mxi [g] | mxi [Ma.-%] |
| $x_1$ < 63 | 380,83 | 38,08 | 390,66 | 39,07 | 403,14 | 40,31 | 366,71 | 36,67 | 372,50 | 37,25 | 363,53 | 36,35 |
| $x_2$ < 90 | 221,50 | 22,15 | 227,22 | 22,72 | 234,48 | 23,45 | 213,29 | 21,33 | 216,65 | 21,67 | 211,44 | 21,14 |
| $x_3$ < 125 | 127,58 | 12,76 | 130,88 | 13,09 | 135,06 | 13,51 | 122,85 | 12,29 | 124,79 | 12,48 | 121,79 | 12,18 |
| $x_4$ < 250 | 42,75 | 4,27 | 34,00 | 3,40 | 35,08 | 3,51 | 31,91 | 3,19 | 32,42 | 3,24 | 31,64 | 3,16 |
| $x_5$ < 500 | 185,23 | 18,52 | 147,30 | 14,73 | 152,01 | 15,20 | 138,27 | 13,83 | 140,45 | 14,05 | 137,07 | 13,71 |
| $x_6$ ≥ 500 | 42,10 | 4,21 | 33,47 | 3,35 | 34,54 | 3,45 | 31,42 | 3,14 | 31,92 | 3,19 | 31,15 | 3,11 |
| Zusatzstoff | - | - | 36,48 | 3,65 | 5,68 | 0,57 | 95,55 | 9,55 | 81,27 | 8,13 | 103,40 | 10,34 |
| $\sum$ | 1000,00 | 100,00 | 1000,00 | 100,00 | 1000,00 | 100,00 | 1000,00 | 100,00 | 1000,00 | 100,00 | 1000,00 | 100,00 |
| Wasser | 583,33 | | 598,39 | | 617,51 | | 561,70 | | 570,57 | | 556,83 | |

Figur 2d

| Siebfraktion Maschenweite | V5 | | V2 | | M1 | |
|---|---|---|---|---|---|---|
| | Wasser/Mörtel Verhältnis | | Wasser/Mörtel Verhältnis | | Wasser/Mörtel Verhältnis | |
| | 0,56 | | 0,60 | | 0,86 | |
| | Masse | | Masse | | Masse | |
| xi [µm] | mxi [g] | mxi [Ma.-%] | mxi [g] | mxi [Ma.-%] | mxi [g] | mxi [Ma.-%] |
| x1 < 63 | 367,74 | 36,77 | 391,32 | 39,13 | 373,25 | 37,32 |
| x2 < 90 | 213,89 | 21,39 | 227,61 | 22,76 | 217,09 | 21,71 |
| x3 < 125 | 123,20 | 12,32 | 131,10 | 13,11 | 125,04 | 12,50 |
| x4 < 250 | 32,00 | 3,20 | 34,05 | 3,41 | 32,48 | 3,25 |
| x5 < 500 | 138,66 | 13,87 | 147,55 | 14,76 | 140,73 | 14,07 |
| x6 ≥ 500 | 31,51 | 3,15 | 33,53 | 3,35 | 31,98 | 3,20 |
| Zusatzstoff | 93,01 | 9,30 | 34,84 | 3,48 | 79,42 | 7,94 |
| ∑ | 1000,00 | 100,00 | 1000,00 | 100,00 | 1000,00 | 100,00 |
| Wasser | 563,28 | | 599,41 | | 860,00 | |

Figur 2e

| Bezeichnung | Nullprobe / Zusatzstoff | Dosie-rung [Vol.-%] | Massen-verhältnis Wasser / Mörtel + Zusatzstoff | BET-Ober-fläche $a_S$ [m²/g] | E-Modul Mittelwert $E_{dyn.}$ [GPa] 7 [d] | 28 [d] | Dreipunkt-Biegezug-festigkeit Mittelwert $\beta_B$ [MPa] 7 [d] | 28 [d] | Druck-festigkeit Mittelwert $\beta_D$ [MPa] 7 [d] | 28 [d] | Wärmeleit-fähigkeit Mittelwert $\lambda_{10,\,tr.}$ [W/(m·K)] | Trocken-rohdichte Mittelwert $\rho_R$ [g/cm³] |
|---|---|---|---|---|---|---|---|---|---|---|---|---|
| N | Dünnbettmörtel | Nullprobe | 0,58 | 17,34 | 5,3 | 4,4 | 1,3 | 2,5 | 8,0 | 10,3 | 0,21 | 0,85 |
| V1 | Expandiertes Vulkangestein Sorte I | 10 | 0,60 | 9,57 | 5,5 | 5,3 | 1,2 | 3,0 | 11,0 | 11,7 | 0,22 | 0,85 |
| V3 | Glashohlkugeln | 10 | 0,61 | 8,89 | 5,0 | 4,6 | 1,8 | 2,3 | 6,8 | 9,6 | 0,22 | 0,81 |
| V4 | Bimsmehl Sorte I | 10 | 0,57 | 12,25 | 6,3 | 5,7 | 1,8 | 3,4 | 12,0 | 14,5 | 0,23 | 0,92 |
| V6 | Vermiculit | 10 | 0,58 | 8,32 | 6,1 | 5,4 | 1,9 | 3,5 | 11,9 | 12,0 | 0,23 | 0,93 |
| V7 | Schmelzkammer-Granulat | 10 | 0,55 | 9,49 | 6,2 | 5,7 | 1,6 | 3,7 | 11,2 | 14,2 | 0,24 | 0,93 |
| V5 | Bimsmehl Sorte II | 10 | 0,56 | 10,09 | 6,6 | 6,4 | 1,6 | 4,1 | 12,9 | 15,1 | 0,25 | 0,96 |
| V2 | Expandiertes Vulkangestein Sorte II | 10 | 0,60 | 17,33 | 4,1 | 4,0 | 1,0 | 2,7 | 7,2 | 9,0 | 0,18 | 0,73 |
| M1 | Hydrophile, pyrogene Kieselsäure | 10 | 0,86 | 18,02 | 5,6 | 4,9 | 1,2 | 2,0 | 8,7 | 11,9 | 0,17 | 0,82 |

Figur 3

| Bezeichnung | Nullprobe / Zusatzstoff | Dosierung [Vol.-%] | Massen-Verhältnis Wasser / Mörtel + Zusatzstoff | BET-Oberfläche $a_s$ [m²/g] | E-Modul $E_{dyn.}$ [GPa] 7 [d] | E-Modul $E_{dyn.}$ [GPa] 28 [d] | Dreipunkt-Biegezugfestigkeit $\beta_B$ [MPa] 7 [d] | Dreipunkt-Biegezugfestigkeit $\beta_B$ [MPa] 28 [d] | Druckfestigkeit $\beta_D$ [MPa] 7 [d] | Druckfestigkeit $\beta_D$ [MPa] 28 [d] | Wärmeleitfähigkeit Mittelwert $\lambda_{10,tr.}$ [W/(m·K)] | Trockenrohdichte Mittelwert $\rho_R$ [g/cm³] |
|---|---|---|---|---|---|---|---|---|---|---|---|---|
| N | Dünnbettmörtel | Nullprobe | 0,58 | 17,34 | 5,3 | 4,4 | 1,3 | 2,5 | 8,0 | 10,3 | 0,21 | 0,85 |
| X1 | Pyrogene Kieselsäure | 10 | 1,00 | 50,70 | 5,0 | 4,5 | 1,0 | 1,6 | 8,1 | 10,0 | 0,15 | 0,75 |
|  |  |  | 1,10 | 64,52 | 4,0 | 3,7 | 0,8 | 1,4 | 5,5 | 8,0 | 0,15 | 0,70 |
|  |  |  | 1,20 | 63,91 | 3,9 | 2,9 | 1,0 | 1,0 | 5,1 | 6,8 | 0,13 | 0,65 |
|  |  |  | 1,40 | 60,55 | 2,5 | 2,3 | 0,7 | 1,0 | 3,4 | 3,9 | 0,12 | 0,59 |
|  |  |  | 1,65 | 56,00 | 1,7 | 1,6 | 0,7 | 0,7 | 2,2 | 2,3 | 0,11 | 0,54 |
| V8 | Expandierter Perlit | 5 | 0,73 | 15,90 | 4,9 | 4,2 | 2,1 | 3,0 | 7,6 | 10,2 | 0,22 | 0,83 |
|  |  | 10 | 0,87 | 15,53 | 3,5 | 3,4 | 1,6 | 2,7 | 6,0 | 7,4 | 0,21 | 0,79 |
|  |  | 15 | 1,00 | 13,28 | 2,9 | 2,5 | 1,5 | 1,9 | 3,8 | 5,5 | 0,19 | 0,75 |
| M2 | Pyrogene Kieselsäure und expandierter Perlit in Kombination | 5 + 5 | 0,70 | 23,44 | 6,6 | 6,3 | 1,8 | 2,2 | 8,2 | 8,9 | 0,22 | 0,85 |
|  |  | 5 + 5 | 0,80 | 35,93 | 4,9 | 4,8 | 1,4 | 2,3 | 5,5 | 9,0 | 0,19 | 0,79 |
|  |  | 5 + 5 | 1,00 | 34,91 | 3,7 | 3,0 | 1,1 | 1,5 | 3,7 | 4,2 | 0,16 | 0,69 |
|  |  | 5 + 5 | 1,22 | 39,68 | 2,7 | 2,0 | 1,1 | 1,3 | 3,1 | 3,4 | 0,14 | 0,63 |
| M3 |  | 5 + 10 | 1,35 | 32,46 | 2,6 | 1,3 | 0,8 | 1,0 | 2,0 | 3,3 | 0,14 | 0,60 |
| M4 |  | 7,5 + 7,5 | 1,53 | 42,26 | 2,5 | 1,4 | 0,8 | 0,8 | 2,2 | 3,0 | 0,12 | 0,55 |
| M5 |  | 10 + 5 | 1,70 | 51,99 | 1,6 | 1,5 | 0,7 | 0,8 | 2,0 | 2,9 | 0,10 | 0,53 |
| M6 | Pyrogene Kieselsäure und expandiertes Vulkangestein in Kombination | 5 + 5 | 0,70 | 23,78 | 6,2 | 5,8 | 1,2 | 2,4 | 9,6 | 10,4 | 0,21 | 0,87 |
|  |  | 5 + 5 | 0,80 | 37,11 | 5,2 | 5,1 | 1,1 | 2,1 | 6,0 | 10,0 | 0,18 | 0,76 |
|  |  | 5 + 5 | 0,90 | 30,62 | 3,8 | 3,3 | 1,1 | 1,7 | 4,5 | 6,3 | 0,17 | 0,67 |
|  |  | 5 + 5 | 1,00 | 31,07 | 3,2 | 2,6 | 1,2 | 1,3 | 3,6 | 4,8 | 0,15 | 0,65 |
|  |  | 5 + 5 | 1,10 | 33,92 | 2,4 | 2,3 | 1,0 | 1,4 | 2,8 | 4,9 | 0,14 | 0,63 |
|  |  | 5 + 5 | 1,20 | 30,88 | 2,2 | 2,1 | 1,0 | 1,1 | 2,7 | 3,4 | 0,14 | 0,59 |

Figur 4

Figur 5

Figur 6

21

| Bezeichnung | Nullprobe / Zusatzstoff | Porengrößen-bereich [μm] | Spezi-fisches Poren-volumen Anteilig $V_q$ [cm³/g] | Spezi-fisches Poren-volumen Gesamt $V_q$ [cm³/g] | Häufigster Porendurch-messer $d_P$ [μm] | Mittlerer Poren-durch-messer $d_P$ [μm] |
|---|---|---|---|---|---|---|
| N | Trockenmörtel-Pulver ungesiebt | 200,00 - 4,00 | 0,311 | 0,75 | 4,68 | 3,17 |
| | | 4,00 - 0,05 | 0,426 | | | |
| | | 0,05 - 0,02 | 0,009 | | | |
| M1 | Pyrogene Kieselsäure | 205,00 - 4,00 | 10,324 | 14,70 | 35,58 | 16,04 |
| | | 4,00 - 0,05 | 3,511 | | | |
| | | 0,05 - 0,02 | 0,868 | | | |
| V8 | Expandierter Perlit | 205,00 - 4,00 | 4,217 | 4,85 | 8,19 | 8,01 |
| | | 4,00 - 0,05 | 0,632 | | | |
| | | 0,05 - 0,02 | 0,000 | | | |
| V2 | Expandiertes Vulkangestein | 195,00 - 4,00 | 3,803 | 6,82 | 19,48 | 5,73 |
| | | 4,00 - 0,05 | 3,016 | | | |
| | | 0,05 - 0,02 | 0,041 | | | |

Figur 7

| Bezeich-nung | Nullprobe / Zusatzstoff | Dosie-rung [Vol.-%] | Massen-Verhält-nis Wasser / Mörtel + Zusatz-stoff | Fest-stoff-dichte ρF [g/cm³] | Poren-größen-bereich [µm] | Spezi-fisches Poren-volu-men Anteilig Vq [cm³/g] | Spezi-fisches Poren-volu-men Gesamt Vq [cm³/g] | Poren-volu-men-Verhäl tnis | Häufigster Poren-durch-messer dP [µm] | Mittle-rer Poren-durch-messer dP [µm] | Poro-sität Φ [%] | Druck-festig-keit 28 [d] βD [MPa] | Wärme-leitfähig-keit 28 [d] λ10, tr. [W/(m·K)] |
|---|---|---|---|---|---|---|---|---|---|---|---|---|---|
| W | Dünnbettmö rtel | Null-probe | 0,58 | 2,08 | 210,00 - 4,00 | 0,191 | 0,70 | 0,09 | 2,73 | 1,36 | 59,1 | 10,3 | 0,21 |
|  |  |  |  |  | 4,00 - 0,05 | 0,482 |  |  |  |  |  |  |  |
|  |  |  |  |  | 0,05 - 0,02 | 0,023 |  |  |  |  |  |  |  |
|  |  |  |  |  | 1,00 - 0,10 | 0,253 |  |  |  |  |  |  |  |
| M1 | Pyrogene Kieselsäure | 10 | 1,00 | 2,29 | 190,00 - 4,00 | 0,039 | 0,70 | 0,47 | 0,44 | 0,29 | 61,5 | 10,0 | 0,15 |
|  |  |  |  |  | 4,00 - 0,05 | 0,491 |  |  |  |  |  |  |  |
|  |  |  |  |  | 0,05 - 0,02 | 0,167 |  |  |  |  |  |  |  |
|  |  |  |  |  | 1,00 - 0,10 | 0,357 |  |  |  |  |  |  |  |
| M6 | Pyrogene Kieselsäure und expandierter Perlit kombiniert | 5 + 5 | 0,80 | 2,55 | 205,00 - 4,00 | 0,042 | 0,61 | 0,17 | 0,36 | 0,34 | 61,0 | 9,0 | 0,19 |
|  |  |  |  |  | 4,00 - 0,05 | 0,500 |  |  |  |  |  |  |  |
|  |  |  |  |  | 0,05 - 0,02 | 0,070 |  |  |  |  |  |  |  |
|  |  |  |  |  | 1,00 - 0,10 | 0,406 |  |  |  |  |  |  |  |
| M2 | Pyrogene Kieselsäure und expandierte s Vulkangeste in kombiniert | 5 + 5 | 0,80 | 2,15 | 185,00 - 4,00 | 0,048 | 0,65 | 0,23 | 0,39 | 0,30 | 58,2 | 10,0 | 0,18 |
|  |  |  |  |  | 4,00 - 0,05 | 0,509 |  |  |  |  |  |  |  |
|  |  |  |  |  | 0,05 - 0,02 | 0,090 |  |  |  |  |  |  |  |
|  |  |  |  |  | 1,00 - 0,10 | 0,389 |  |  |  |  |  |  |  |

Figur 8

EP 3 717 437 B1

Figur 9

Figur 10

Figur 11

Figur 12a

Figur 12b

Figur 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19911307 C2
- DE 102006020877 A1
- WO 2009067727 A1
- EP 3138826 A1
- DE 2624950 A1
- EP 2030956 A2